# FASCICULE DE BREVET EUROPEEN

(11) **EP 2 481 639 B1**
(45) Date de publication et mention de la délivrance du brevet: **25.12.2013**
(21) Numéro de dépôt: 12152232.0
(22) Date de dépôt: 24.01.2012
(51) Int. Cl.: B60R 13/01

(54) **Garniture pour benne dechargeable par l'arriere, benne equipee d'une telle garniture et son procede de chargement/dechargement**
Auskleidung für Heckkipplastwagen, mit einer solchen Auskleidung ausgestatteter Heckkipplastwagen sowie sein Belade- und Entladeverfahren
Lining for rear-unloading dump truck body, equipped with such a lining and loading/unloading method therefore

(30) Priorité: 01.02.2011 FR 1150746; 19.04.2011 FR 1153364; 27.10.2011 FR 1159770
(43) Date de publication de la demande: 01.08.2012
(73) Titulaire: S.a.r.l. Lemee, 22100 Aucaleuc (FR)
(72) Inventeur: Lemee, Hervé, 22270 JUGON LES LACS (FR); Lemee, Christophe, 22270 JUGON LES LACS (FR)
(74) Mandataire: Godineau, Valérie

(56) Documents cités:
- DE-A1- 10 064 626
- US-A- 5 803 531
- US-A- 6 076 693
- US-A1- 2006 011 561
- US-A1- 2010 206 817

## Description

La présente invention concerne une garniture pour benne déchargeable par l'arrière par basculement, ainsi qu'une benne équipée d'une telle garniture et un procédé de chargement/déchargement d'une telle benne.

On tend aujourd'hui à utiliser une même benne pour le transport de matières de nature différente qui ne doivent pas, notamment pour des raisons d'hygiène, entrer en contact. Ainsi, lors d'un voyage aller, la benne transporte des matières non alimentaires, telles que du lisier, et lors du voyage de retour, des céréales.

Jusqu'à présent, il est procédé à un lavage approfondi de la benne entre les deux voyages pour permettre un tel transport. Toutefois, en dépit du soin apporté au lavage, les risques de contamination demeurent importants.

De bennes revêtues d'une garniture intérieure sont connues de l'état de la technique comme l'illustre en particulier le brevet US-5.803.531. Dans ce document, la garniture intérieure est soudée à la benne (voir page 4 lignes 30 et suivantes). Cette garniture est destinée à délimiter une pluralité de cases à l'intérieur desquelles une matière tampon peut être introduite. Une telle solution n'est pas de nature à empêcher la contamination entre deux charges transportées et ne permet pas l'isolement d'une première matière transportée par rapport à une deuxième matière transportée.

Un autre type de garniture de benne et de benne est divulgué dans US 2010/206817 A1. Ce document divulgue en outre une garniture pour benne déchargeable par l'arrière, comprenant au moins une poche, à ouverture de chargement par le dessus, insérable dans la benne, ladite poche comportant un fond et une paroi latérale périphérique liée au fond, ladite paroi latérale périphérique comportant au moins deux parties en regard formant les flancs de ladite poche et au moins une partie reliant lesdites parties en regard entre elles et formant l'une des faces d'extrémité de la poche, dite face d'extrémité arrière de la poche, les flancs et la face d'extrémité arrière de la poche étant respectivement positionnables les uns, en regard des faces longitudinales de la benne, l'autre, en regard de la face arrière de la benne.

Un but de la présente invention est donc de proposer une garniture de benne et une benne équipée d'une telle garniture dont les conceptions permettent de limiter la contamination d'une matière transportée par une autre matière transportée.

Un autre but de la présente invention est de proposer une garniture de benne et une benne équipée d'une telle garniture, dont les conceptions permettent de sécuriser les opérations de nettoyage entre deux étapes de chargement avec des charges de nature différente et ainsi d'éviter les contaminations croisées.

A cet effet, l'invention a pour objet une garniture, pour benne déchargeable par l'arrière par basculement, ladite garniture comprenant au moins une poche, à ouverture de chargement par le dessus, insérable dans la benne, ladite poche comportant un fond et une paroi latérale périphérique liée au fond, ladite paroi latérale périphérique comportant au moins deux parties en regard formant les flancs de ladite poche et au moins une partie reliant lesdites parties en regard entre elles et formant l'une des faces d'extrémité de la poche, dite face d'extrémité arrière de la poche, les flancs et la face d'extrémité arrière de la poche étant respectivement positionnables les uns, en regard des faces longitudinales de la benne, l'autre, en regard de la face arrière de la benne, **caractérisée en ce que** la poche est une poche pliable et en ce que la face d'extrémité dite arrière de la poche, positionnable en regard de la face arrière de déchargement de la benne, est munie d'une ouverture de déchargement du contenu de la poche.

L'insertion, au moins partielle, d'une garniture comprenant au moins une poche pliable à l'intérieur de la benne permet de transporter un type de charge à l'intérieur de la poche de la garniture, à l'état déployé de ladite poche, et un autre type de charge à l'extérieur de la poche dans l'espace laissé libre entre poche et face arrière de la benne, à l'état plié de la poche, de sorte que tout contact entre les différents types de charges est évité, voire empêché. La poche pliable est donc une poche présentant deux configurations : l'une active correspondant à l'état déployé de la poche, l'autre inactive correspondant à l'état plié de la poche, lesdites configurations active et inactive étant sélectivement activables. La poche est apte à passer d'un état déployé encore appelé configuration active pour le transport de charge à l'intérieur de la poche à un état plié, encore appelé configuration inactive, pour le transport de charge à l'extérieur de la poche, en particulier dans l'espace laissé libre entre poche et face arrière de la benne, à l'état inséré de la poche dans la benne. En configuration active, à l'état déployé de la poche, les flancs sont déployés et la face d'extrémité arrière de la poche est écartée de la face d'extrémité opposée, dite face d'extrémité avant de la poche. En configuration inactive, à l'état plié de la poche, les flancs sont repliés et la face d'extrémité arrière de la poche est rapprochée de la face d'extrémité opposée, dite face d'extrémité avant de la poche.

La face d'extrémité avant de la poche, opposée à la face d'extrémité arrière de la poche, est positionnable au voisinage de la face avant de la benne. Cette face d'extrémité avant peut être réalisée sous forme d'une face au moins partiellement fermée par la paroi périphérique de la poche, lorsque la paroi périphérique est réalisée sous forme d'une paroi continue au niveau de la face d'extrémité avant de la poche. Cette face d'extrémité avant de la poche peut être réalisée sous forme d'une face d'extrémité au moins partiellement ouverte, obturable, apte à être fermée par la face avant de la benne à l'état inséré de la poche dans la benne, lorsque la paroi périphérique de la poche est une paroi discontinue interrompue au niveau de la face d'extrémité avant de la poche. Dans ce mode de réalisation, les bords des flancs de la poche et le bord du fond de la poche servant à la délimitation de la face d'extrémité avant de la poche sont solidarisables à la benne pour permettre la fermeture de la face d'extrémité avant de la poche à l'aide de la face avant de la benne à l'état inséré de la poche dans la benne.

La garniture comporte en outre, pour chaque flanc de la poche, des moyens de guidage en déplacement dudit flanc et des moyens de couplage à coulissement du flanc auxdits moyens de guidage pour le passage de la poche entre une configuration active de plus grand encombrement de la poche, dans laquelle les flancs sont déployés et une configuration inactive de plus faible encombrement, dans laquelle les flancs sont repliés.

En configuration active de la poche, les faces d'extrémité de la poche sont écartées l'une de l'autre alors qu'en configuration inactive de la poche, les faces d'extrémité sont rapprochées l'une de l'autre.

La présence de moyens de guidage permet de faciliter le pliage/dépliage de la poche qui peut s'opérer en un temps court et généralement en présence d'un seul opérateur.

A l'état inséré dans la benne, la poche de la garniture, en configuration inactive, est disposée au voisinage de la face avant de la benne pour ménager, entre poche et face arrière de déchargement de la benne, un espace de chargement de la benne isolé de la poche au moins par la face d'extrémité arrière de ladite poche.

De préférence, les moyens de guidage d'un flanc de la poche comprennent, au moins un élément du genre rail auquel la partie supérieure dudit flanc est couplée par l'intermédiaire d'organes de roulement ou de glissement pour un déplacement à coulissement du flanc le long dudit rail.

De préférence encore, la garniture comporte, pour chaque flanc de la poche, des moyens pour un montage mobile en déplacement des moyens de guidage du flanc de la poche dans le sens d'un rapprochement et d'un écartement des moyens de guidage de l'autre flanc de la poche, en vue du passage de l'ouverture de chargement de la poche d'une position ouverte à une position fermée et inversement.

Grâce à cette conception, en configuration active de plus grand encombrement, la poche est apte à passer aisément d'une position fermée de l'ouverture de chargement à une position ouverte de l'ouverture de chargement, et inversement.

La poche est donc une poche pliable dont les flancs sont montés mobiles entre une position repliée correspondant à une configuration inactive de la poche et une position déployée correspondant à une configuration active de la poche, au moins une partie de ces flancs, en l'occurrence au moins les parties supérieures de ces flancs, étant, en configuration active de la poche, montées mobiles entre une position rapprochée correspondant à la position fermée de l'ouverture de chargement et une position écartée correspondant à une position ouverte de l'ouverture de chargement.

De préférence, les moyens, pour le passage des moyens de guidage d'un flanc de la poche d'une position écartée à une position rapprochée des moyens de guidage de l'autre flanc de la poche, comprennent au moins des moyens d'entrainement en déplacement desdits moyens de guidage.
Ces moyens d'entraînement en déplacement desdits moyens de guidage comprennent au moins une crémaillère dont une partie est montée solidaire d'au moins une partie des moyens de guidage et dont l'autre partie est apte à être couplée à la benne.

De préférence, ces moyens d'entraînement en déplacement desdits moyens de guidage comprennent au moins deux crémaillères, dont une partie de chaque crémaillère est montée solidaire d'au moins une partie des moyens de guidage, et dont l'autre partie de chaque crémaillère est apte à être couplée à la benne. Généralement, les parties de crémaillère couplées à la benne sont disposées pour l'une des crémaillères au voisinage de la face avant de la benne et pour l'autre crémaillère au voisinage de la face arrière de la benne.

La présence de moyens d'entraînement en déplacement permet notamment, à un seul opérateur, en un temps court, d'ouvrir, ou respectivement de fermer, ladite ouverture de chargement.

Dans le mode de réalisation dans lequel les moyens de guidage d'un flanc de la poche comprennent au moins un élément du genre rail auquel la partie supérieure dudit flanc est couplée par l'intermédiaire d'organes de roulement ou de glissement pour un déplacement à coulissement du flanc le long dudit rail, et dans lequel la garniture comporte des moyens par l'intermédiaire desquels lesdits rails sont aptes à être montés mobiles dans le sens d'un rapprochement et d'un écartement l'un de l'autre pour le passage de l'ouverture de chargement de la poche d'une position ouverte à une position fermée et inversement, les moyens, par l'intermédiaire desquels lesdits rails sont aptes à être montés mobiles dans le sens d'un rapprochement et d'un écartement l'un de l'autre pour le passage de l'ouverture de chargement de la poche d'une position ouverte à une position fermée et inversement, comprennent, pour chaque rail, au moins des moyens d'entrainement en déplacement dudit rail, ces moyens d'entraînement en déplacement dudit rail comportant au moins une crémaillère dont le pignon est porté par ledit rail à déplacer, et dont la pièce rectiligne crantée apte à s'engrener avec le pignon est positionnable perpendiculairement audit rail et est apte à être solidarisée à la benne en particulier à la caisse de la benne. Chaque rail est équipé à, ou au voisinage de son extrémité libre, d'un pignon rotatif en prise par engrènement avec une pièce rectiligne crantée disposée généralement au-dessus et parallèlement à l'une des faces avant ou arrière de la benne, de sorte que le pignon de chaque rail jouxtant la face arrière de la benne vient en prise avec la pièce rectiligne disposée au-dessus de la face arrière de la benne, tandis que le pignon de chaque rail jouxtant la face avant de la benne vient en prise avec la pièce rectiligne disposée au-dessus de la face avant de la benne, les pignons équipant un même rail étant reliés entre eux par un organe de transmission de mouvement tel qu'une tige, pour permettre lors de l'entraînement en rotation d'un des pignons, l'entraînement en rotation de l'autre pignon dudit rail en vue d'un déplacement du rail parallèlement à lui-même dans le sens d'un rapprochement ou d'un écartement de l'autre rail.

De préférence, l'organe de transmission de mouvement est logé à l'intérieur du rail dans une cavité ou gorge longitudinale dudit rail ouverte à chacune de ses extrémités, ce rail comportant, de préférence, une deuxième cavité longitudinale fendue longitudinalement, à l'intérieur de laquelle sont logés les moyens de couplage à coulissement du flanc aux moyens de guidage en déplacement dudit flanc. Cette deuxième cavité est disposée à la base du rail tandis que la cavité logeant l'organe de transmission de mouvement est disposée au sommet dudit rail.

Chaque rail présente sur chacun de ses flancs qui relient entre eux la face du dessus et la face du dessous dudit rail une aile longitudinale. L'une des ailes longitudinales, dite externe, de chaque rail est apte à venir à recouvrement du dessus d'une face longitudinale de la benne que le rail jouxte en position écartée desdits rails. L'autre aile longitudinale, dite interne, de chaque rail est apte à recouvrir ou à être recouverte par l'aile longitudinale interne de l'autre rail à l'état rapproché desdits rails.

De préférence, la garniture comporte des moyens activables/désactivables de maintien en position rapprochée des moyens de guidage d'un flanc de la poche et des moyens de guidage de l'autre flanc de la poche.

Ces moyens permettent d'éviter une ouverture intempestive de l'ouverture de chargement de la poche, notamment pendant les phases de transport de la charge.

Généralement, la garniture comporte des moyens activables/ désactivables de tension des flancs de la poche en vue d'un maintien à l'état tendu desdits flancs, en configuration active de plus grand encombrement de la poche, dans laquelle les flancs sont déployés.

Ces moyens de tension des flancs peuvent affecter un grand nombre de formes.

De préférence, l'ouverture de déchargement du contenu de la poche est ménagée dans la moitié inférieure de la face d'extrémité arrière de la poche.

L'ouverture de déchargement est une ouverture obturable. En particulier, le bord inférieur de l'ouverture de déchargement qui s'étend entre les deux flancs de la poche est muni d'un rabat positionnable en applique contre la surface externe de la face d'extrémité arrière de la poche pour permettre l'obturation de ladite ouverture de déchargement.

En position déployée de la poche et en position ouverte de l'ouverture de déchargement, le rabat isole également la benne de la charge à décharger et permet d'éviter tout contact de la matière avec la benne, en particulier avec le bord arrière du fond de la benne au cours du déchargement.

De préférence, la garniture comporte en outre au moins un volet d'isolement de la poche apte à être monté mobile entre deux positions, l'une active dans laquelle ledit volet est dressé et double par l'extérieur la face d'extrémité arrière de la poche, l'autre inactive dans laquelle il libère l'accès à la face d'extrémité arrière de la poche.

De préférence, la garniture comporte en outre des moyens activables/désactivables de maintien du volet en position dressée pour permettre le passage dudit volet de la position dressée active dans laquelle il double par l'extérieur ladite face d'extrémité arrière, à l'état activé desdits moyens de maintien, à une position inactive à plat dans laquelle il est apte à s'étendre sous le fond de la poche, de préférence au voisinage de la face d'extrémité dite avant de la poche, opposée à la face d'extrémité arrière de la poche à l'état désactivé desdits moyens de maintien.

La présence d'un tel volet permet, en position dressée de ce dernier, de compartimenter transversalement la benne en un premier espace, disposé entre la face avant de la benne et le volet, et logeant la poche à l'état plié, et un deuxième espace, disposé entre le volet et la face arrière de la benne, et à l'intérieur duquel une charge peut être transportée.

L'invention a encore pour objet une benne déchargeable par l'arrière par basculement, ladite benne comprenant un fond, une face arrière, des faces longitudinales et une face avant, et étant munie d'une garniture insérable au moins partiellement dans la benne, ladite garniture comprenant au moins une poche, à ouverture de chargement par le dessus, ladite poche comportant un fond et une paroi latérale périphérique liée au fond, ladite paroi latérale périphérique comportant au moins deux parties en regard formant les flancs de ladite poche et au moins une partie reliant lesdites parties en regard entre elles et formant l'une des faces d'extrémité de la poche, dite face d'extrémité arrière de la poche, les flancs et la face d'extrémité arrière de la poche étant respectivement positionnables les uns, en regard des faces longitudinales de la benne, l'autre, en regard de la face arrière de la benne,
**caractérisée en ce que** la face d'extrémité dite arrière de la poche, positionnable en regard de la face arrière de déchargement de la benne, est munie d'une ouverture de déchargement du contenu de la poche et en ce que la poche est une poche pliable qui, à l'état inséré dans la benne, présente sa face d'extrémité arrière montée mobile, dans le sens d'un rapprochement et d'un écartement de la face avant de la benne, suivant une direction sensiblement parallèle à l'axe longitudinal de la benne, entre une configuration active de la poche encore appelée état déployé de la poche, correspondant à l'état écarté desdites faces et au déploiement des flancs et une configuration inactive de la poche encore appelée état plié de la poche correspondant à l'état rapproché desdites faces et au repli des flancs.

Ladite benne comprend deux faces longitudinales, une face avant, une face arrière et un fond. Cette benne présente donc une garniture insérable au moins partiellement dans la benne.

La garniture comprend au moins une poche à ouverture de chargement par le dessus comportant un fond positionnable en regard du fond de la benne, des flancs positionnables en regard des faces longitudinales de la benne, une face dite d'extrémité arrière positionnable en regard de la face arrière de la benne, cette face d'extrémité arrière étant munie d'une ouverture de déchargement du contenu de la poche. Cette poche comporte encore une face d'extrémité dite avant opposée à la face d'extrémité arrière et positionnable au voisinage de la face avant de la benne. Cette face d'extrémité avant est une face au moins partiellement ouverte obturable par la face avant de la benne ou une face au moins partiellement fermée. Cette poche est une poche pliable qui, à l'état inséré dans la benne, présente sa face d'extrémité arrière montée mobile, dans le sens d'un rapprochement et d'un écartement de la face avant de la benne, suivant une direction sensiblement parallèle à l'axe longitudinal de la benne, entre une configuration active de la poche encore appelée état déployé de la poche, correspondant à l'état écarté desdites faces et au déploiement des flancs et une configuration inactive de la poche encore appelée état plié de la poche correspondant à l'état rapproché desdites faces et au repli des flancs. Les flancs de la poche sont, en configuration active de la poche, montés au moins partiellement mobiles dans le sens d'un rapprochement et d'un écartement l'un de l'autre suivant une direction transversale, de préférence orthogonale, à l'axe longitudinal de la benne entre une position fermée de l'ouverture de chargement de la poche correspondant à l'état rapproché desdits flancs, en particulier des bords libres supérieurs desdits flancs, et une position ouverte de l'ouverture de chargement de la poche correspondant à l'état écarté desdits flancs, en particulier des bords libres supérieurs desdits flancs.

La garniture comporte encore au moins un volet d'isolement de la poche qui, à l'état dressé en position active, compartimente transversalement la benne en un premier espace, disposé entre la face avant de la benne et le volet et logeant la poche à l'état plié en configuration inactive, et un deuxième espace, disposé entre le volet et la face arrière de la benne et à l'intérieur duquel une charge peut être transportée. Ce volet est monté mobile entre la position active et une position inactive dans laquelle il s'étend à plat sur le fond de la benne ou le long d'une des parois longitudinales de la benne pour libérer l'espace intérieur de la benne et permettre le passage de la poche de la configuration inactive à la configuration active.

Ce volet peut, pour son passage de la position active à la position inactive et inversement, être relié au fond de la benne par une liaison pivot (à axe dit horizontal parallèle au fond de la benne) de type charnière. Ce volet peut encore, pour son passage de la position active à la position inactive et inversement, être relié à une paroi longitudinale de la benne par une liaison pivot de type charnière à axe dit vertical perpendiculaire au plan du fond de benne.

La benne se caractérise encore par le fait que la garniture est du type précité.

L'invention a encore pour objet un procédé de chargement/déchargement d'une benne, dont la poche pliable de la garniture, apte à passer d'une configuration active de plus grand encombrement de la poche dans laquelle les flancs sont déployés à une configuration inactive de plus faible encombrement, dans laquelle les flancs sont repliés, est en configuration inactive avec la face d'extrémité arrière de la poche rapprochée de la face avant de la benne et ménageant un espace libre de chargement avec la face arrière de la benne, **caractérisé en ce que** ledit procédé comprend au moins deux séries d'étapes de chargement/déchargement sélectivement activables, et en ce que, au cours de l'une des séries d'étapes dite série d'étapes de chargement/déchargement de la poche, ledit procédé comprend au moins une phase d'écartement de la face d'extrémité arrière de la poche de la face avant de la benne jusqu'à amenée de ladite poche dans la configuration active de plus grand encombrement de la poche, une phase de remplissage de la poche par son ouverture de chargement, une phase de vidage de la poche par son ouverture de déchargement, une phase de repli de la poche par rapprochement de la face d'extrémité arrière de la poche de la face avant de la benne jusqu'à amenée de la poche dans la configuration inactive de plus faible encombrement, et en ce qu'au cours de l'autre série d'étapes de chargement/déchargement, dite série d'étapes de chargement/déchargement de la benne, ledit procédé comprend une phase de remplissage de l'espace laissé libre entre poche et face arrière de la benne et une phase de déchargement de la benne par la face arrière de ladite benne.

Comme mentionné ci-dessus, il est ainsi possible d'effectuer un voyage aller avec un premier type de charge et un voyage retour avec un deuxième type de charge sans que les charges n'entrent en contact l'une avec l'autre, tout en optimisant le volume de chargement à chaque voyage.

Dans un mode de mise en oeuvre du procédé avec une benne dont la garniture comporte au moins une poche et un volet d'isolement apte à l'état dressé en position active à compartimenter transversalement la benne en un premier espace, disposé entre la face avant de la benne et le volet et logeant la poche à l'état plié en configuration inactive, et un deuxième espace, disposé entre le volet et la face arrière de la benne, ce volet étant, en position inactive, disposé à plat sur le fond de la benne ou le long d'une paroi longitudinale de la benne, ledit procédé comporte, à l'issue de la série d'étapes de chargement/déchargement de la poche en vue de la mise en oeuvre de la série d'étapes de chargement/déchargement de la benne, une étape d'entraînement en déplacement du volet depuis la position inactive vers la position active et, à l'issue de la série d'étapes de chargement/déchargement de la benne, en vue de la mise en oeuvre de la série d'étapes de chargement/déchargement de la poche, une étape d'entraînement en déplacement du volet depuis la position active vers la position inactive.

L'invention a encore pour objet une garniture du type insérable à l'intérieur d'une benne pour l'obtention d'une benne garnie du type précité.

L'invention sera bien comprise à la lecture de la description suivante d'exemples de réalisation, en référence aux dessins annexés dans lesquels:
La figure 1 représente une vue en perspective en élévation d'une benne équipée d'une garniture conforme à l'invention, en configuration inactive de la poche de la garniture et à l'état positionné à plat contre le fond de la benne du volet, la face arrière de la benne étant ouverte ;
La figure 2 représente une vue en perspective en élévation d'une benne équipée d'une garniture conforme à l'invention à l'état partiellement déployé de la garniture, la face arrière de la benne étant ouverte, la face avant de la poche de la garniture étant une face fermée doublant intérieurement la face avant de la benne ;
La figure 2B représente une vue en perspective en élévation d'une benne équipée d'une garniture conforme à l'invention à l'état partiellement déployé de la garniture, la face arrière de la benne étant ouverte, la face avant de la poche de la garniture étant une face ouverte obturée par la face avant de la benne à laquelle les bords des flancs et du fond de la poche servant à la délimitation de la face avant de la poche sont raccordés ;
La figure 3 représente une vue en perspective en élévation d'une benne équipée d'une garniture conforme à l'invention, en configuration active de la poche de la garniture, et en position fermée de l'ouverture de chargement de la poche, la face arrière de la benne étant ouverte ;
La figure 4A représente une vue partielle en perspective en élévation d'une benne équipée d'une garniture conforme à l'invention, en configuration inactive de la poche de la garniture, à l'état dressé dudit volet compartimentant transversalement la benne en deux espaces, ledit volet étant maintenu à l'état dressé par un loquet ;
La figure 4B représente une vue partielle en perspective en élévation d'une benne équipée d'une garniture conforme à l'invention, en configuration inactive de la poche de la garniture, à l'état dressé dudit volet compartimentant transversalement la benne en deux espaces, ledit volet étant maintenu à l'état dressé par vissage ;

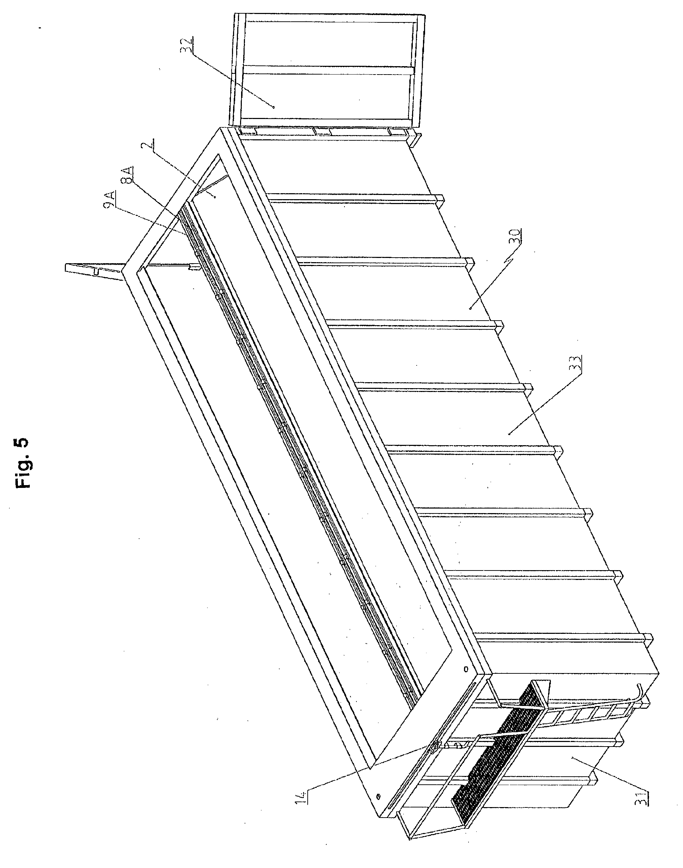

La figure 5 représente une vue en perspective en élévation d'une benne équipée d'une garniture conforme à l'invention, en configuration active de la poche de la garniture, en position fermée de l'ouverture de chargement de la poche, la face arrière de la benne étant ouverte ;
La figure 6 représente une vue partielle de détail des moyens de guidage et des moyens d'entraînement en déplacement desdits moyens de guidage prise au niveau de la face avant de la benne ;
La figure 7A représente une vue partielle de détail des moyens de tension des flancs de la poche prise au niveau de la face avant de la benne ;
La figure 7B représente une vue partielle de détail des moyens de maintien du volet à l'état dressé ;

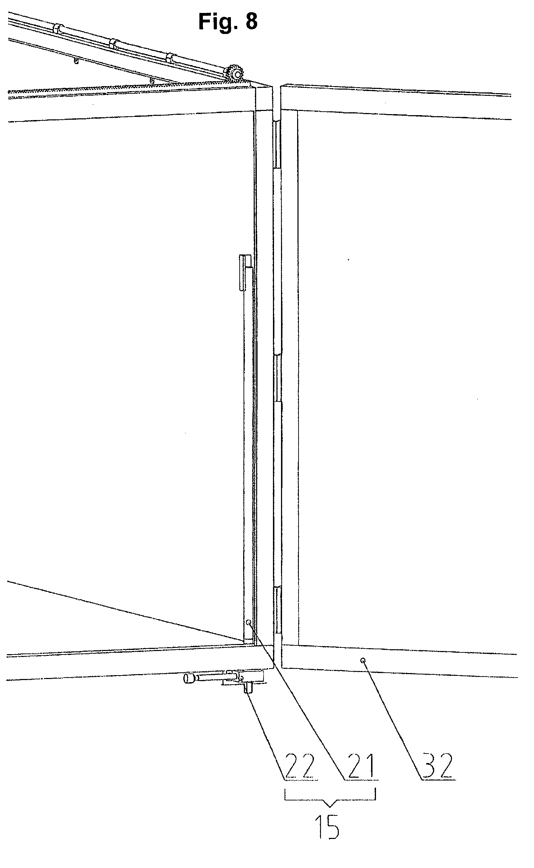

La figure 8 représente une vue partielle de détail des moyens de tension des flancs de la poche prise au niveau de la face arrière de la benne ;
La figure 9 représente une vue de détail des bords supérieurs des flancs dans leurs zones de couplage aux moyens de guidage ;
La figure 10 représente une vue en perspective en élévation de la benne avec la face d'extrémité arrière de la poche équipée de l'ouverture de déchargement en position fermée de ladite ouverture de déchargement ;
La figure 11 représente une vue schématique en coupe d'une benne équipée d'une garniture conforme à l'invention en configuration ouverte de ladite poche de la garniture avec deux vues de détail A, B prises au niveau des moyens de guidage en déplacement de chaque flanc de la poche ;
La figure 12 représente une vue schématique en coupe d'une benne équipée d'une garniture conforme à l'invention en configuration fermée de ladite poche de la garniture avec une vue de détail C prise au niveau des moyens de guidage en déplacement de chaque flanc de la poche ;
La figure 13 représente une vue partielle de face d'un rail et de ses moyens de maintien à l'état rapproché de l'autre rail en position fermée de la poche.

Comme mentionné ci-dessus, la présente invention concerne une garniture pour une benne 30 déchargeable par l'arrière par basculement et une benne, dite garnie, équipée d'une telle garniture.

Elle concerne plus particulièrement une garniture pour une benne qui comporte une face avant 31, une face arrière 32 de déchargement, deux faces longitudinales 33 reliant entre elles les faces avant 31 et arrière 32 de ladite benne et un fond.

La face arrière 32 de déchargement de la benne peut être une face formée d'un volet pivotant, à pivotement autour d'un axe horizontal disposé au voisinage du bord supérieur du volet. Cette face arrière 32 de déchargement peut encore, comme dans l'exemple représenté, être formée de deux portes ouvrant à la française.

La face du dessus de la benne est une face ouverte pour permettre un chargement par le dessus de la benne. Cette face du dessus peut être obturée à l'aide d'une couverture de type bâche stockée, à l'état enroulé, en position ouverte de la face du dessus. Cette face du dessus de la benne peut être équipée d'un arceau 34 reliant entre elles les faces longitudinales de la benne.

Cette benne est généralement équipée, sous sa face formant fond, de moyens de levage permettant un basculement de la benne vers l'arrière avec un fond incliné depuis un point haut avant vers un point bas arrière, de manière à permettre un déchargement par gravité de la charge depuis l'avant vers l'arrière de la benne.

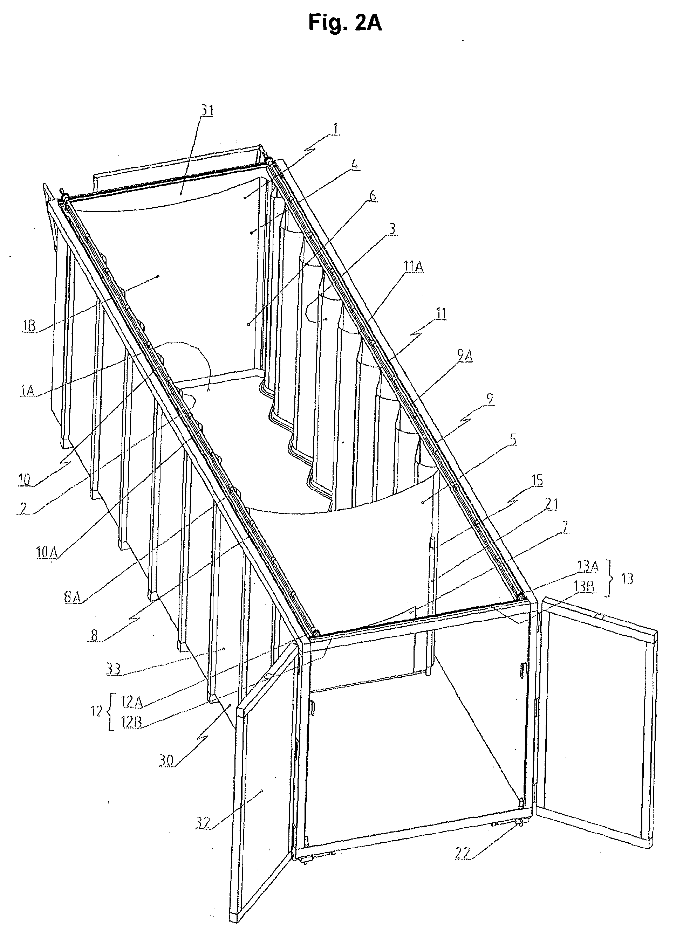

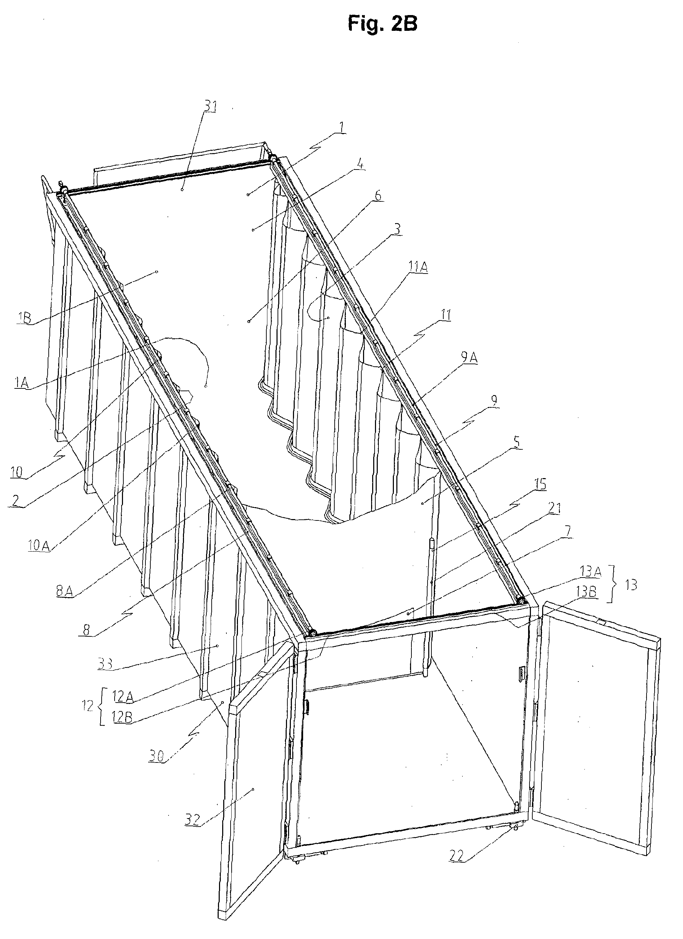

De manière caractéristique à l'invention, la garniture insérable au moins partiellement à l'intérieur de la benne comprend au moins une poche 1, pliable, à ouverture 6 de chargement par le dessus. Cette poche 1 comporte un fond 1A et une paroi 1 B latérale périphérique liée au fond 1A. Ladite paroi 1 B latérale périphérique continue ou discontinue comporte au moins deux parties en regard formant les flancs 2, 3 de ladite poche et une partie reliant lesdites parties en regard entre elles et formant la face 5 d'extrémité dite arrière de la poche. La partie de la poche opposée à la face 5 d'extrémité arrière de la poche forme la face 4 d'extrémité avant de la poche. Cette face 5 d'extrémité avant peut être une face ouverte lorsque la paroi 1 B latérale périphérique de la poche est interrompue dans cette zone. Dans ce mode de réalisation conforme à la figure 2B, cette face 4 d'extrémité avant de la poche est obturable par la face 31 avant de la benne à l'état couplé des bords des flancs et du fond de la poche servant à la délimitation de ladite face 4 d'extrémité avant à la face 31 avant de la benne. Cette face 5 d'extrémité avant de la poche peut être une face au moins partiellement fermée comme l'illustre la figure 2A, cette face d'extrémité avant étant formée de manière analogue à la face d'extrémité arrière de la poche par une partie de la paroi 1 B latérale périphérique de la poche reliant les flancs entre eux de sorte que les faces d'extrémité avant et arrière de la poche sont formées par deux parties en regard de la poche. Cette poche présente donc, à l'état déplié, une forme générale parallélépipédique.

Les flancs 2, 3 de la poche sont positionnables en regard des faces 33 longitudinales de la benne, tandis que les faces 4, 5 d'extrémité de la poche sont positionnables l'une, en regard de la face avant de la benne, l'autre, en regard de la face arrière 32 de la benne. La face 5 d'extrémité, dite arrière de la poche, positionnable en regard ou en vis-à-vis de la face arrière 32 de déchargement de la benne, est munie d'une ouverture 7 de déchargement du contenu de la poche 1. Cette ouverture 7 de déchargement du contenu de la poche est une ouverture obturable dont le moyen d'obturation peut affecter un grand nombre de formes.

Cette poche est une poche souple. Cette poche peut être réalisée en un matériau imperméable du type choisi parmi les matériaux utilisés notamment pour la réalisation de bâches ou de couvertures en matière plastique. Cette poche est dimensionnée de telle sorte que la hauteur de la paroi latérale périphérique de ladite poche est de préférence au moins égale à la hauteur des faces longitudinales et d'extrémité de la benne. L'ouverture de chargement de la poche est délimitée au moins par les bords supérieurs libres des flancs 2, 3 et de la face d'extrémité arrière de la poche.

La poche est une poche pliable pour permettre le passage de ladite poche d'un état plié, appelé configuration inactive, dans laquelle elle libère une partie du volume de la benne pour permettre un remplissage direct de la benne, c'est-à-dire un chargement de la benne en un premier type de charges destinées à venir au contact des parois de la benne, et un état déployé, appelé configuration active, dans laquelle elle remplit le volume intérieur de la benne pour permettre un remplissage indirect de la benne, c'est-à-dire un remplissage de la benne via la poche en un deuxième type de charge qui peut être identique au premier type de charge, ce deuxième type de charge étant destiné à ne pas venir en contact avec les parois de la benne susceptibles d'être en contact avec le premier type de charge au cours des phases de chargement, transport et déchargement de la charge.

En particulier, la garniture comporte en outre, pour chaque flanc 2 ; 3 de la poche des moyens 8 ; 9 de guidage en déplacement dudit flanc et des moyens 10, 11 de couplage à coulissement du flanc auxdits moyens 8 ; 9 de guidage pour le passage de la poche 1 d'une position déployée des flancs 2, 3 correspondant à une configuration active de plus grand encombrement de la poche dans laquelle les faces 4, 5 d'extrémité sont écartées l'une de l'autre, c'est-à-dire la face d'extrémité arrière de la poche est écartée de la face avant de la benne, à une configuration inactive de plus faible encombrement dans laquelle les flancs 2, 3 sont repliés et les faces 4, 5 d'extrémité sont rapprochées l'une de l'autre, c'est-à-dire la face d'extrémité arrière de la poche est rapprochée de la face avant de la benne. Ce passage de la configuration active de la poche à la configuration inactive de la poche s'opère à l'intérieur de la benne par rapprochement de la face d'extrémité arrière de la poche de la face d'extrémité avant de la poche qui jouxte la face avant de la benne.

Dans cette configuration inactive, les faces 4, 5 d'extrémité de la poche sont positionnées proches de la face avant de la benne, le volume restant libre entre face arrière de la benne et face d'extrémité arrière de la poche est utilisé comme volume de remplissage de la benne, alors qu'en configuration active, c'est le volume de la poche s'étendant entre face d'extrémité avant et face d'extrémité arrière de la poche qui est utilisé comme volume de remplissage. Dans les exemples représentés, les moyens 8 ; 9 de guidage d'un flanc 2 ; 3 de la poche sont destinés à prendre au moins partiellement appui de manière indirecte sur la benne en particulier sur le sommet des faces avant et arrière de la benne. Ces moyens 8 ; 9 de guidage d'un flanc 2 ; 3 de la benne comprennent, au moins un élément du genre rail 8A ; 9A auquel la partie supérieure dudit flanc est couplée par l'intermédiaire d'organes 10A ; 11A de roulement ou de glissement pour un déplacement à coulissement du flanc 2 ; 3 le long dudit rail 8A ; 9A. Les zones de couplage entre organes de roulement ou de glissement et flanc de la paroi sont disposées à intervalle le long du bord supérieur de chaque flanc en position déployée dudit flanc de sorte qu'à l'état replié, le flanc présente une structure plissée à ondulations ou plis en accordéon.

Chaque rail s'étend parallèlement à une face longitudinale de la benne, généralement au niveau du bord supérieur de ladite face en position ouverte de l'ouverture de chargement de la poche.

De préférence, les organes de roulement ou de glissement sont quant à eux formés, de manière traditionnelle, par des chariots à roue ou à galet. Chaque rail est donc muni d'une fente longitudinale à l'intérieur de laquelle une partie de chaque chariot, en particulier la roue ou le galet du chariot peut coulisser, l'autre partie du chariot étant couplée à un flanc de la poche. On peut également imaginer d'équiper les flancs de la poche d'anneaux, aptes à être enfilés le long desdits rails.

En configuration active de la poche, il est nécessaire pendant les phases de transport de fermer la face du dessus de la poche pour éviter une dispersion de la charge, notamment en cas de charge sous forme de particules ou de poudre. Cette fermeture peut s'opérer à l'aide d'une bâche rapportée équipant la benne.

Dans un mode de réalisation préféré de l'invention, conforme à ce qui est représenté, la garniture comporte, pour chaque flanc 2 ; 3 de la poche, des moyens 12 ; 13 pour un montage mobile en déplacement des moyens 8 ; 9 de guidage du flanc de la poche dans le sens d'un rapprochement et d'un écartement des moyens 9 ; 8 de guidage de l'autre flanc de la poche, en vue du passage de l'ouverture 6 de chargement de la poche d'une position ouverte à une position fermée et inversement. La position rapprochée des moyens 8 de guidage d'un flanc de la poche et des moyens 9 de guidage de l'autre flanc de la poche, de préférence jusqu'à contact d'appui, correspond à la position fermée de l'ouverture 6 de chargement de la poche et la position écartée des moyens 8 de guidage d'un flanc de la poche et des moyens 9 de guidage de l'autre flanc de la poche correspond à la position ouverte de l'ouverture 6 de changement de la poche.

La poche est donc une poche pliable apte à passer d'une configuration inactive correspondant à l'état plié de la poche à une configuration active correspondant à l'état déplié et inversement par déploiement et repli de ses flancs dans le sens d'un écartement et d'un rapprochement de ses faces d'extrémités et d'une position ouverte à une position fermée et inversement de son ouverture de chargement par rapprochement et écartement de ses flancs, en particulier du bord supérieur de ses flancs en configuration active.

De préférence, les moyens 12 ; 13, pour le passage des moyens 8 ; 9 de guidage d'un flanc 2 ; 3 de la poche d'une position écartée à une position rapprochée des moyens 9 ; 8 de guidage de l'autre flanc 3 ; 2 de la poche, comprennent au moins des moyens d'entrainement en déplacement desdits moyens de guidage.

En particulier, la garniture comporte des moyens 12, 13 par l'intermédiaire desquels lesdits rails 8A, 9A sont aptes à être montés mobiles dans le sens d'un rapprochement et d'un écartement l'un de l'autre pour le passage de l'ouverture 6 de chargement de la poche d'une position ouverte à une position fermée et inversement.

Les moyens, par l'intermédiaire desquels lesdits rails 8A, 9A sont aptes à être montés mobiles dans le sens d'un rapprochement et d'un écartement l'un de l'autre pour le passage de l'ouverture 6 de chargement de la poche d'une position ouverte à une position fermée et inversement, comprennent pour chaque rail 8A ; 9A au moins des moyens 12 ; 13 d'entrainement en déplacement dudit rail, ces moyens d'entraînement en déplacement dudit rail comportant au moins une crémaillère dont le au moins un pignon 12A, 13A est porté par ledit rail 8A, 9A à déplacer et dont la pièce 12B, 13B rectiligne crantée, apte à s'engrener avec le au moins un pignon 12A, 13A, est positionnable perpendiculairement audit rail 8A, 9A.

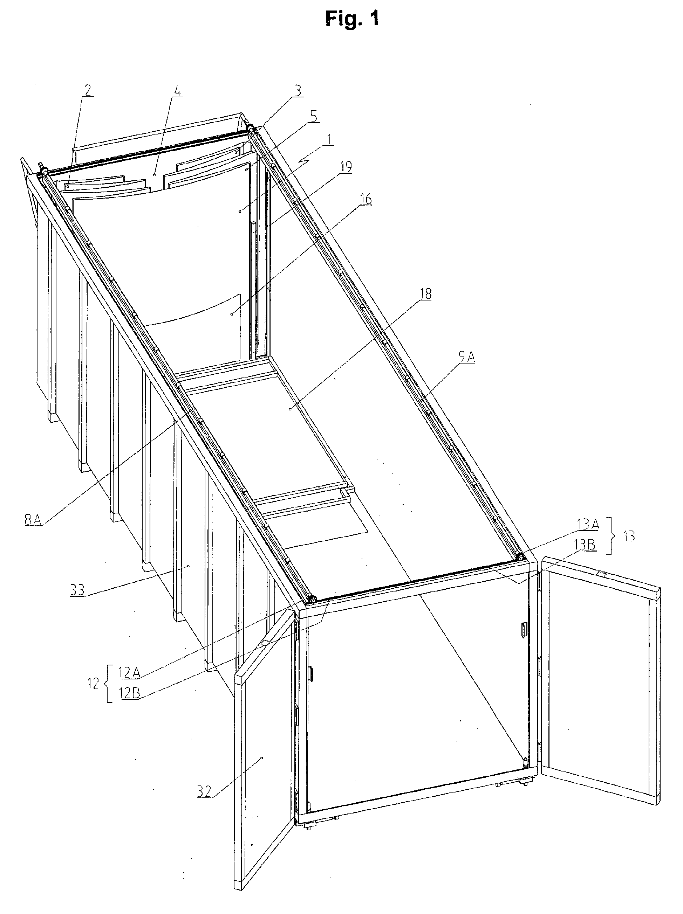

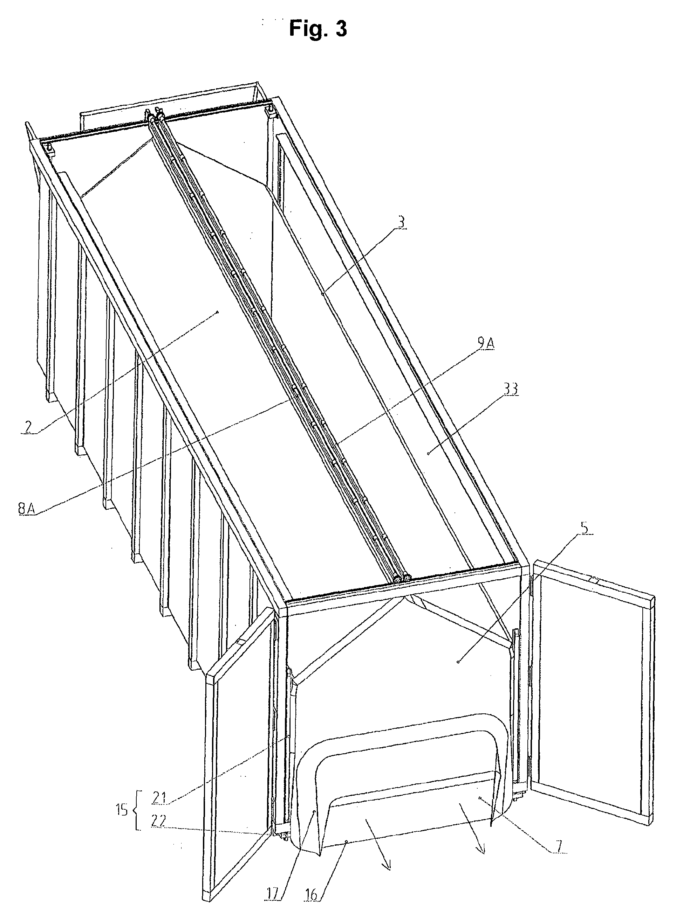

Les figures 1 et 3 illustrent les deux positions extrêmes susceptibles d'être occupées par les rails 8A, 9A constitutifs des moyens de guidage des flancs 2, 3 de la poche.

Ainsi, le flanc 2 couplé au rail 8A par l'intermédiaire d'organes 10 de roulement ou de frottement et le flanc 3 couplé au rail 9A par l'intermédiaire d'organes 11 de roulement ou de frottement sont en position d'écartement maximal à la figure 1 et en position de rapprochement maximal à la figure 3. Ces rails s'étendent donc parallèlement au bord supérieur des flancs de la poche, en configuration active de la poche, et parallèlement aux faces longitudinales de la benne et sont déplaçables suivant une direction transversale auxdits rails dans le sens d'un rapprochement et d'un écartement.
Généralement, ces rails se déplacent parallèlement à eux-mêmes dans le sens d'un rapprochement pour la fermeture de l'ouverture de chargement de la poche et d'un écartement l'un de l'autre pour l'ouverture de l'ouverture de chargement de la poche. La position rapprochée des rails, constitutifs des moyens de guidage, correspond donc à la position fermée de l'ouverture 6 de chargement alors que la position écartée des rails, constitutifs des moyens de guidage, correspond à la position ouverte de l'ouverture 6 de déchargement. En position fermée de l'ouverture 6 de déchargement, les rails s'étendent sensiblement parallèlement à l'axe longitudinal médian de la benne et au niveau de cet axe longitudinal médian.

Pour permettre le passage d'une position à une autre, chaque rail 8A; 9A est équipé, à ou au voisinage de son extrémité libre, d'un pignon 12A, 13A rotatif s'engrenant avec une pièce 12B, 13B rectiligne crantée disposée généralement au-dessus et parallèlement à l'une des faces avant ou arrière de la benne. Cette pièce 12B, 13B est couplée à la benne en venant par exemple en appui sur l'une des faces avant ou arrière de la benne. Chaque rail 8A, 9A comporte donc deux pignons, à savoir un à chacune de ses extrémités. Chaque pignon vient en prise avec une pièce rectiligne crantée pour former une crémaillère.

Dans les exemples représentés, le pignon de chaque rail jouxtant la face arrière de la benne vient en prise avec la pièce rectiligne crantée disposée au-dessus de la face arrière de la benne, tandis que le pignon de chaque rail jouxtant la face avant de la benne vient en prise avec la pièce rectiligne crantée disposée au-dessus de la face avant de la benne.

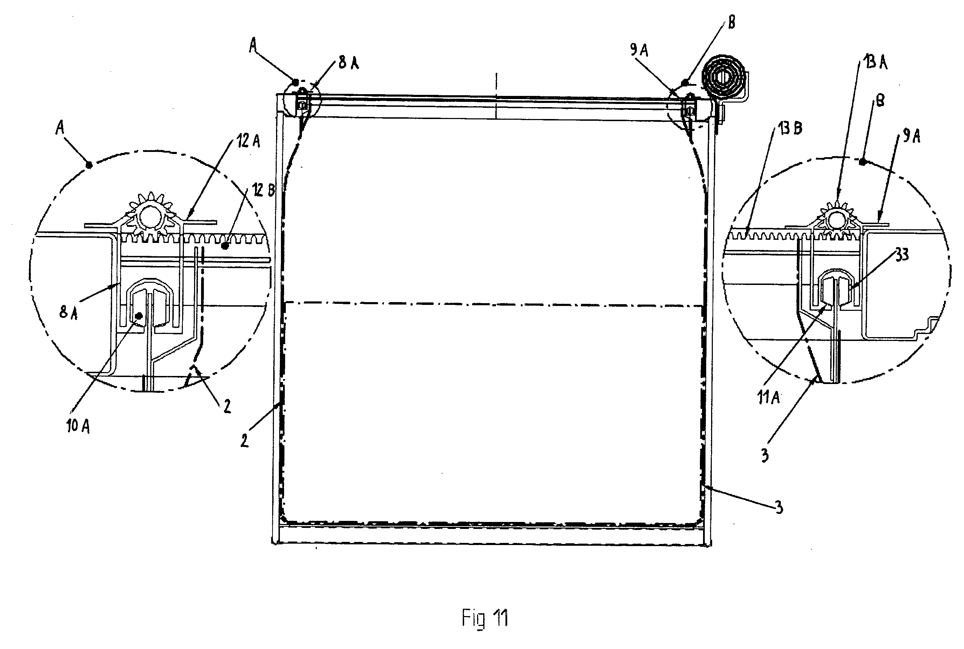

Les pignons équipant un même rail sont reliés entre eux par un organe de transmission de mouvement, tel qu'une tige, de manière à permettre lors de l'entraînement en rotation d'un des pignons, l'entraînement en rotation de l'autre pignon. Cette tige est de préférence logée à l'intérieur du rail dans une cavité longitudinale traversante ou gorge longitudinale dudit rail comme l'illustre la figure 11. Cette cavité longitudinale est de préférence ménagée au sommet dudit rail.

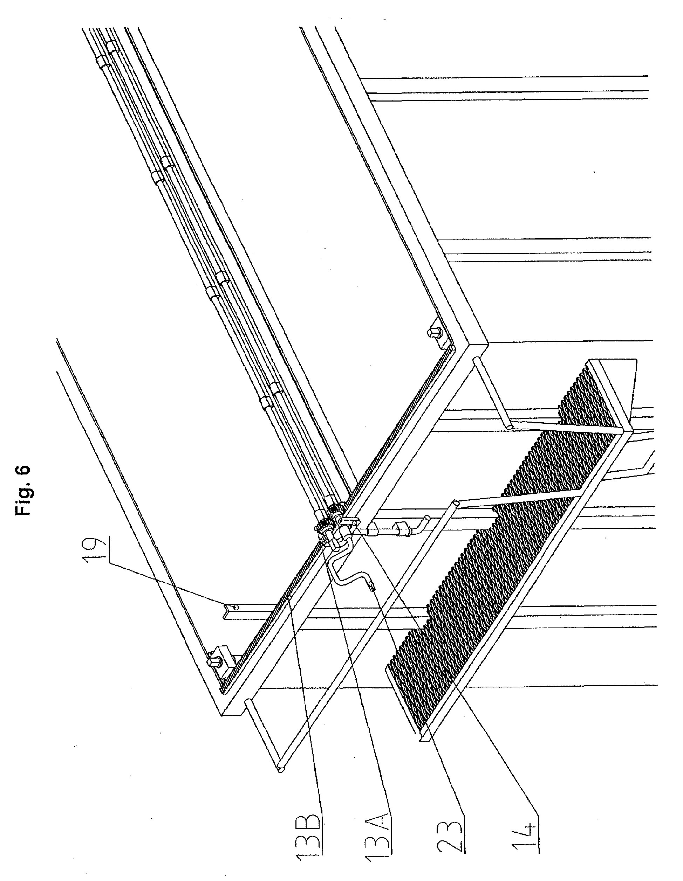

Cet entraînement en rotation des pignons s'engrenant avec une pièce rectiligne provoque un déplacement du rail parallèlement à lui-même dans le sens d'un rapprochement ou d'un écartement de l'autre rail. Cet entraînement en rotation des pignons peut s'opérer à l'aide d'une manivelle 23 comme l'illustre la figure 6.

A cet effet, chaque pignon peut être équipé en son centre d'un carré apte à venir en prise par emboîtement avec l'extrémité de la manivelle. Ainsi, un seul opérateur peut successivement entraîner en déplacement le premier rail puis le deuxième rail à partir d'une même face d'extrémité de la benne, sans nécessiter la présence d'un opérateur supplémentaire.

Généralement, la pièce rectiligne crantée de la crémaillère et son pignon sont surmontés d'un capot pour masquer au moins partiellement lesdits éléments. Il en est de même des rails de guidage.

Dans les exemples représentés, l'organe de transmission de mouvement est logé à l'intérieur du rail dans une cavité ou gorge longitudinale dudit rail ouverte à chacune de ses extrémités. Ce rail comporte de préférence une deuxième cavité longitudinale fendue longitudinalement encore appelée fente à l'intérieur de laquelle sont logés les moyens de couplage à coulissement du flanc aux moyens de guidage. Cette deuxième cavité est disposée à la base du rail.

Bien évidemment, les moyens d'entraînement en déplacement des moyens de guidage pourraient être remplacés par des glissières le long desquelles les rails se déplaceraient. Les glissières auraient une position similaire à celle des pièces rectilignes crantées dans le cas d'une crémaillère. Dans ce cas, il sera toutefois difficile à un opérateur de commander seul l'ouverture et la fermeture de l'ouverture de chargement. Le risque est que le rail, en raison de sa longueur, ne se déplace pas correctement parallèlement à lui-même. La présence d'un pignon s'engrenant avec une pièce rectiligne à chaque extrémité du rail permet d'éviter cet écueil.

Dans les exemples représentés, la garniture comporte des moyens 14 activables/désactivables de maintien en position rapprochée des moyens 8 de guidage d'un flanc 2 de la poche et des moyens 9 de guidage de l'autre flanc 3 de la poche.

Dans l'exemple illustré à la figure 6, ces moyens 14 de maintien sont ici formés par un cavalier positionnable sur la face externe de la face avant de la benne, ce cavalier étant apte à être animé d'un mouvement de monte et baisse et venant en position haute enserrer les tiges portant chacune une paire de pignons d'un rail. Dans cette position haute, ce cavalier empêche un écartement desdits rails.

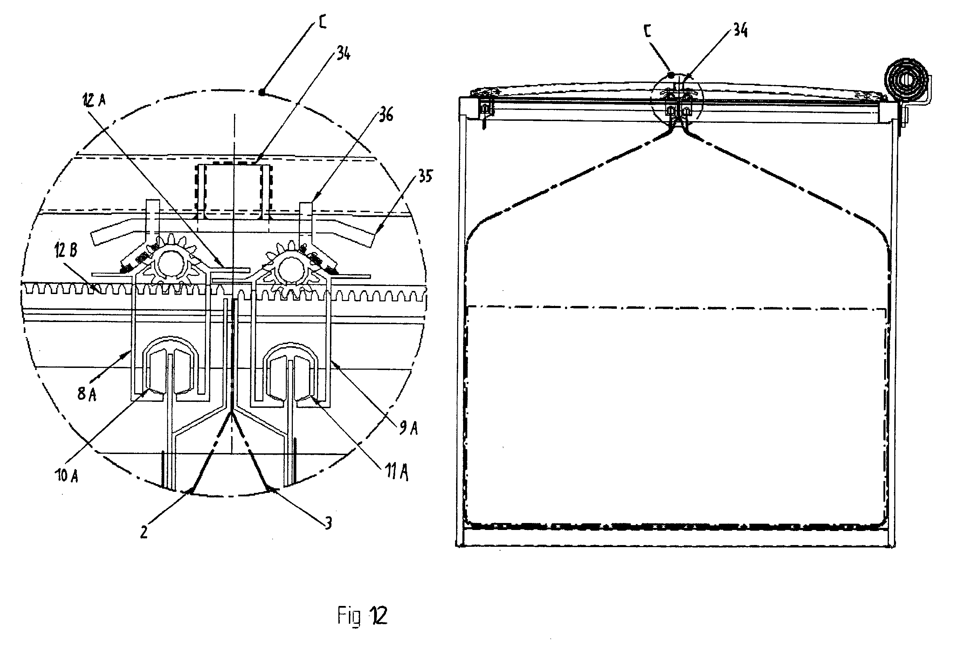

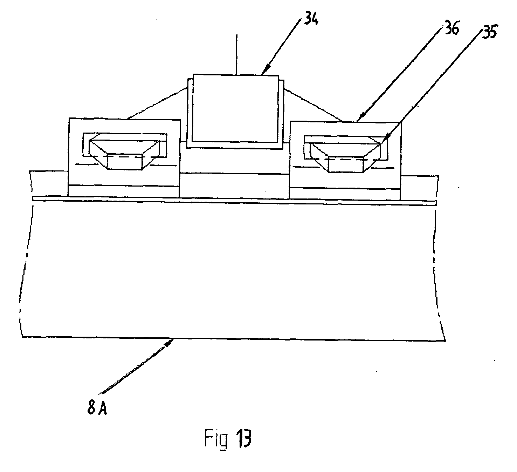

Dans un autre mode de réalisation représenté aux figures 12 et 13, la benne est équipée d'un arceau 34 reliant entre elles les faces longitudinales de la benne. Cet arceau 34 est muni, dans sa zone médiane, sur sa face du dessous de pattes 35 élastiques aptes à venir en prise avec des lumières 36 ménagées sur le dessus de chaque rail. En l'occurrence, l'arceau comporte deux paires de pattes, chaque paire de pattes étant apte à venir en prise avec une paire de lumières portées par un rail. La coopération patte 35/lumière 36 assure le maintien des rails en position rapprochée. Les moyens 14 activables/désactivables de maintien en position rapprochée des moyens 8 de guidage d'un flanc de la poche et des moyens 9 de guidage de l'autre flanc 3 de la poche sont donc formées d'organe(s) mâle(s) du genre patte et d'organe(s) femelle(s) de préférence de genre lumière aptes à être portés indifféremment l'un ou les uns par les moyens de guidage, l'autre ou les autres par une partie stationnaire de la benne, ces organes mâles et femelles étant aptes à venir en prise généralement par déformation élastique lorsque les moyens de guidage occupent une position correspondant à la position fermée de l'ouverture de chargement.

La garniture comporte des moyens 15 activables/ désactivables de tension des flancs 2, 3 de la poche en vue d'un maintien à l'état tendu desdits flancs 2, 3, en configuration active de plus grand encombrement de la poche, dans laquelle les faces 4, 5 d'extrémité sont écartées l'une de l'autre.

Ces moyens de tension des flancs peuvent affecter un grand nombre de formes. Dans l'exemple représenté à la figure 3, ces moyens de tension comprennent deux montants 21 parallèles disposés chacun le long d'un bord vertical de la face d'extrémité arrière de la poche. Chaque montant 21 est apte, en configuration active de la poche, à venir en prise à emboîtement avec un organe 22 mâle du genre plot, ou un organe femelle du genre fourreau, disposé dans la face formant fond de la benne, et faisant saillie sous le fond de la benne, pour pouvoir être entraîné en rotation autour de son axe longitudinal à l'aide par exemple d'un levier disposé sous ledit fond de manière à permettre par entraînement en rotation des montants 21 une tension des flancs de la poche. Ces montants 21 sont désaccouplables de la face formant fond de la benne pour le passage de la poche de la configuration active à la configuration inactive.

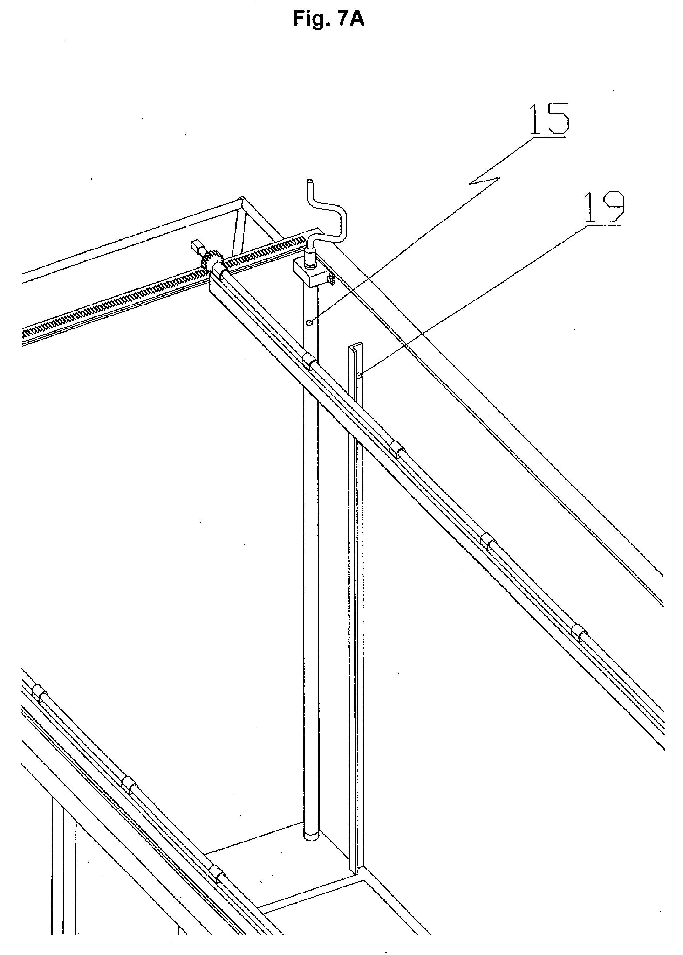

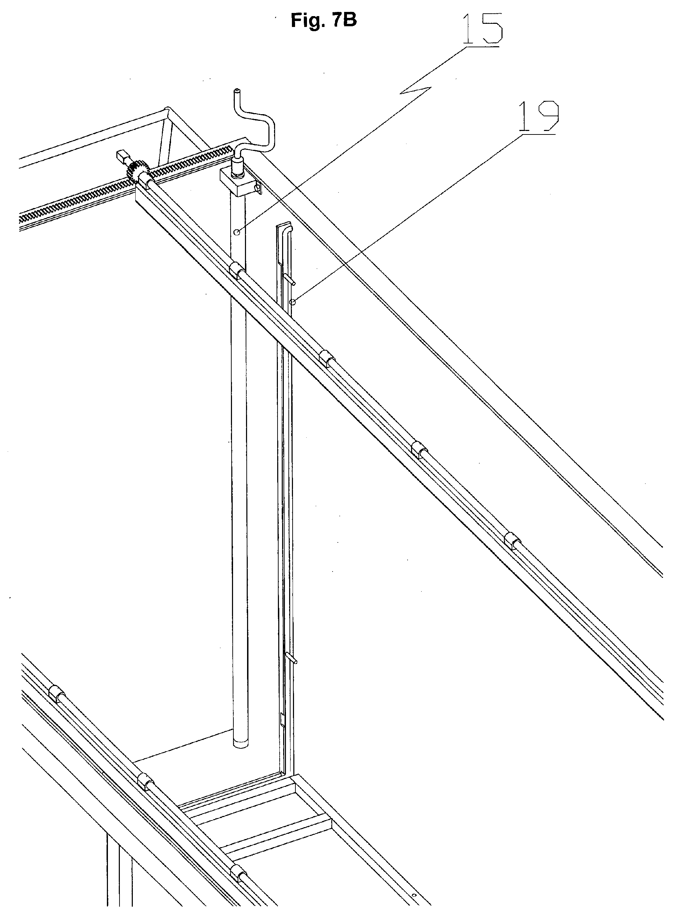

Un système de tension similaire peut être prévu au niveau de la face avant de la benne, ce système de tension étant manoeuvrable non plus par le fond mais par le dessus de la benne à l'aide d'une manivelle comme l'illustre la figure 7. Dans ce cas, les montants couplés à la face d'extrémité de la poche sont uniquement rotatifs.

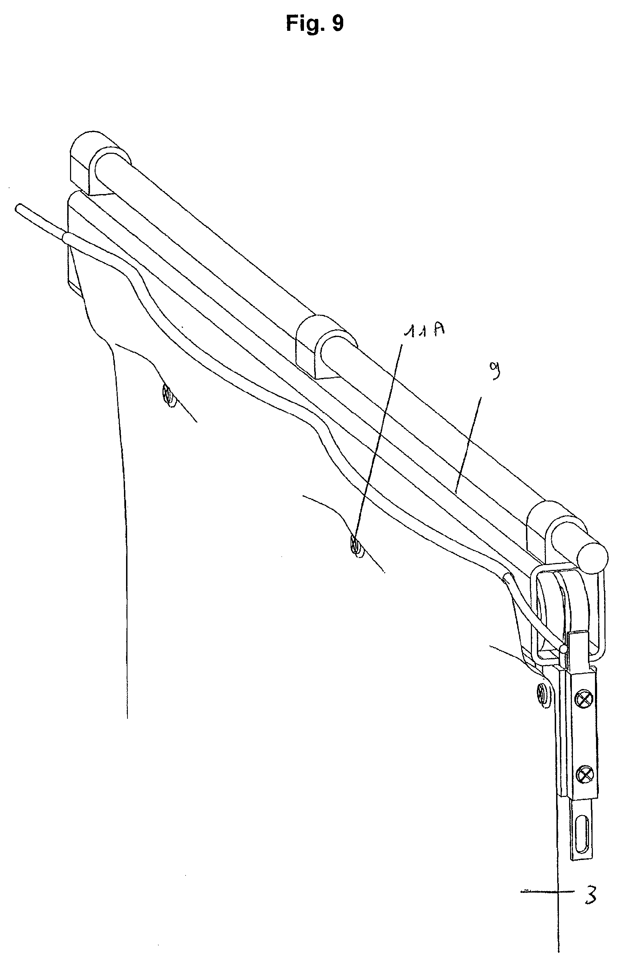

Comme cela apparaît à la figure 9, le bord supérieur de chaque flanc de la poche est équipé d'un câble de tension du flanc, ce câble étant à l'une de ses extrémités fixé au premier chariot d'entraînement de la poche et à son autre extrémité en un point stationnaire de la poche ou de la benne. Ce premier chariot d'entraînement est celui positionné, parmi l'ensemble des chariots, le plus proche de la face d'extrémité arrière de la poche. Ainsi, lors du déplacement du chariot d'une position rapprochée de la face d'extrémité avant de la poche vers une position rapprochée de la face d'extrémité arrière de la poche, le câble logé dans un ourlet du bord libre supérieur du flanc de la poche tend à se tendre, tendant en parallèle ledit bord supérieur du flanc de la poche. En position tendue, ce bord supérieur du flanc de la poche applique le flanc de la poche contre le rail et fait, de préférence, légèrement saillie au-dessus de ce dernier.

L'ouverture 7 de déchargement du contenu de la poche est ménagée dans la moitié inférieure de la face 5 d'extrémité arrière de la poche.

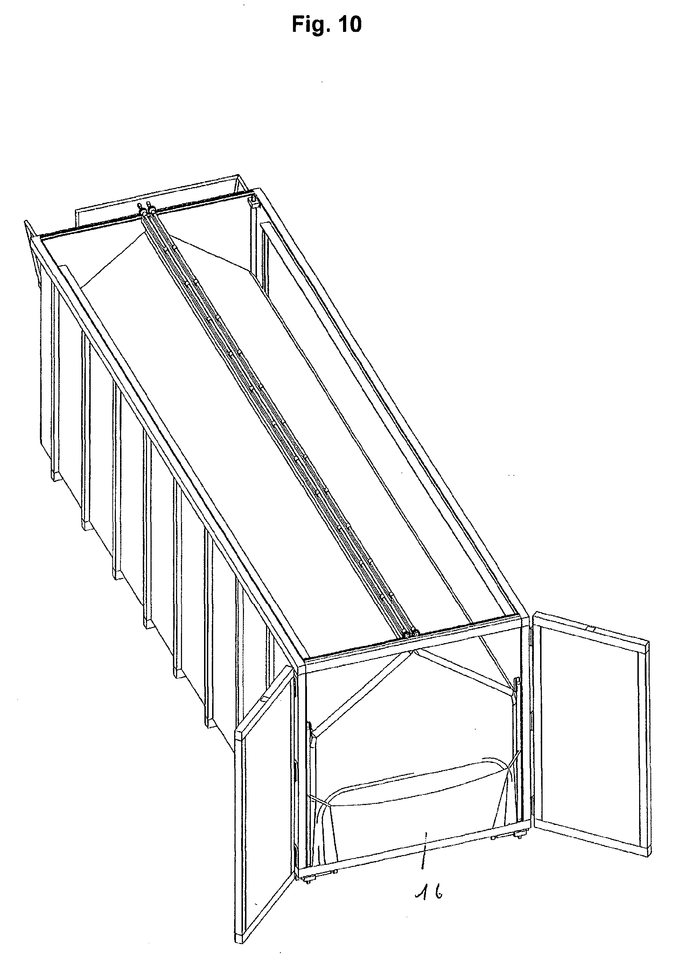

Le bord inférieur de l'ouverture 7 de déchargement qui s'étend entre les deux flancs 2, 3 de la poche est muni d'un rabat 16 positionnable en applique contre la surface externe de la face 5 d'extrémité arrière de la poche pour permettre l'obturation de ladite ouverture 7 de déchargement. Ce rabat 16 est retenu en applique contre ladite surface externe par l'intermédiaire d'organes de liaison à la face 5 d'extrémité arrière tels que des tendeurs comme représenté à la figure 10.

En position déployée, c'est-à-dire écartée de la face 5 d'extrémité arrière de la poche, ce rabat recouvre le bord libre arrière du fond de la benne pour empêcher un contact de la matière sortant de la poche avec les parois de la benne. Le passage du rabat de la position en applique correspondant à la position d'obturation de l'ouverture de déchargement à la position déployée correspondant à la position ouverte de ladite ouverture de déchargement s'opère par simple désolidarisation des organes de liaison de type tendeurs de la face 5 d'extrémité arrière de la poche.

De préférence, la face 5 d'extrémité arrière de la poche est interrompue au voisinage de sa zone de raccordement au fond 1A de la poche, sur au moins une partie de sa largeur correspondant à la distance entre flancs 2, 3 de la poche, pour former l'ouverture 7 de déchargement du contenu de la poche.

La face 5 d'extrémité arrière de la poche est, dans la zone jouxtant l'ouverture 7 de déchargement, munie, au niveau de ses angles inférieurs, dans la zone de raccordement aux flancs 2, 3 de la poche, de soufflets 17, aptes à faciliter la béance de l'ouverture 7 de déchargement du contenu de la poche.

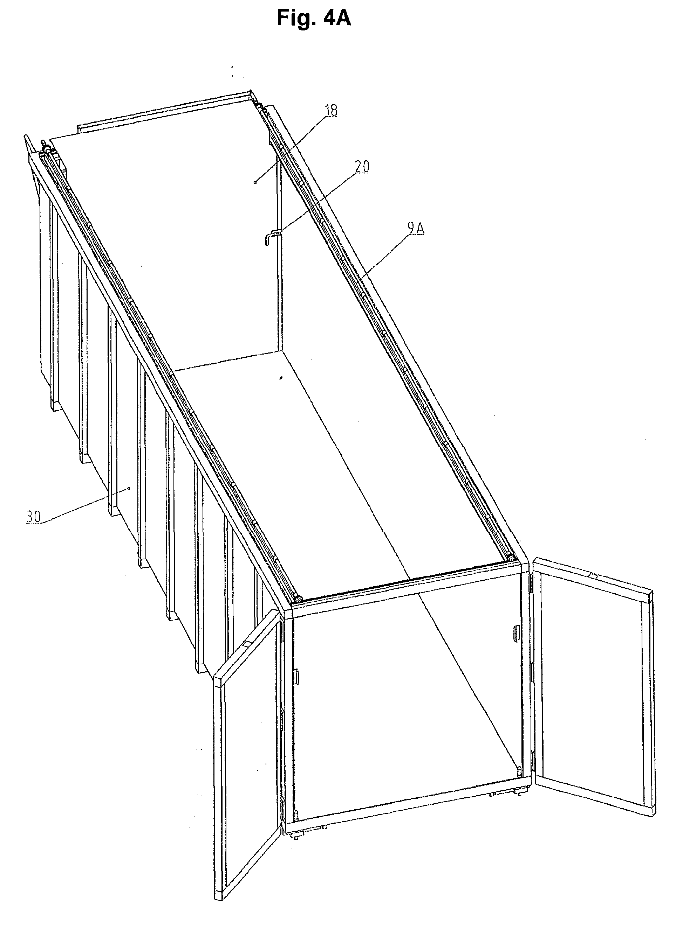

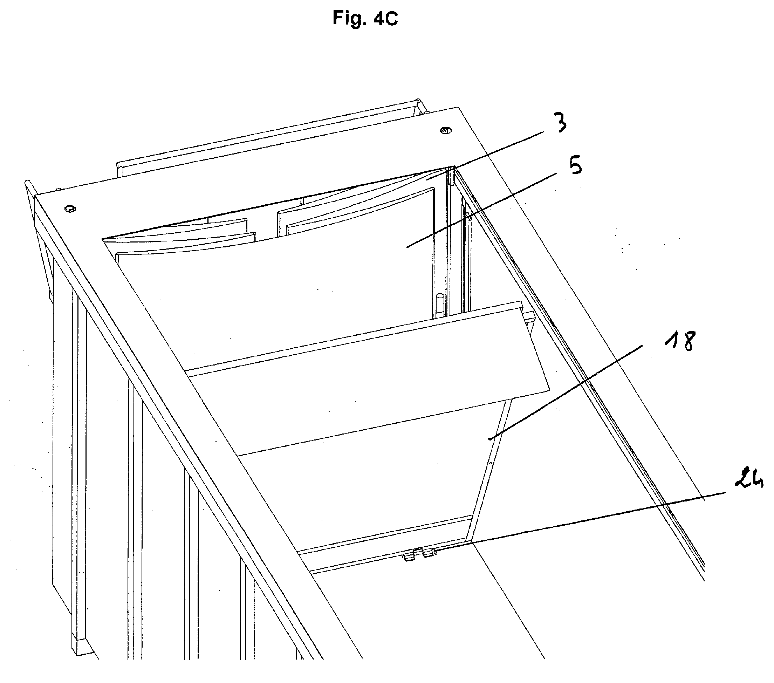

Pour isoler la poche en configuration inactive, et réduire encore les risques de contamination de la poche, la garniture comporte en outre au moins un volet 18 d'isolement ou d'enveloppement au moins partiel de la poche 1 apte, à l'état dressé et en position active à compartimenter transversalement la benne, et des moyens 19, 20 activables/désactivables de maintien du volet 18, à l'état dressé, en position active. Divers modes de réalisation de ce volet peuvent être envisagés. Dans l'exemple représenté aux figures 4A à 4C, le volet 18 est monté mobile entre une position active dans laquelle il s'étend sensiblement parallèlement à la face 31 avant de la benne et délimite, avec ladite face, un espace de logement de la poche en configuration inactive, à l'état activé desdits moyens 19, 20 de maintien, et une position inactive à plat dans laquelle il est apte à s'étendre sous le fond 1A de la poche, de préférence au voisinage de la face 4 d'extrémité avant de la poche, à l'état désactivé desdits moyens 19, 20 de maintien. Ces moyens 19, 20 de maintien sont par exemple formés par deux cornières ou profilés 19 positionnés chacun verticalement le long d'une face longitudinale de la benne pour former des butées de fin de course des bords verticaux du volet ou de montants équipant les bords verticaux du volet en position dressée dudit volet et par un loquet 20 ou des vis disposé(es) côté face du volet tournée vers la face arrière de la benne pour maintenir le volet en position dressée. Une garniture d'étanchéité peut être prévue au niveau des cornières ou profilés, ladite garniture étant comprimée par le volet à l'état dressé en position active dudit volet.

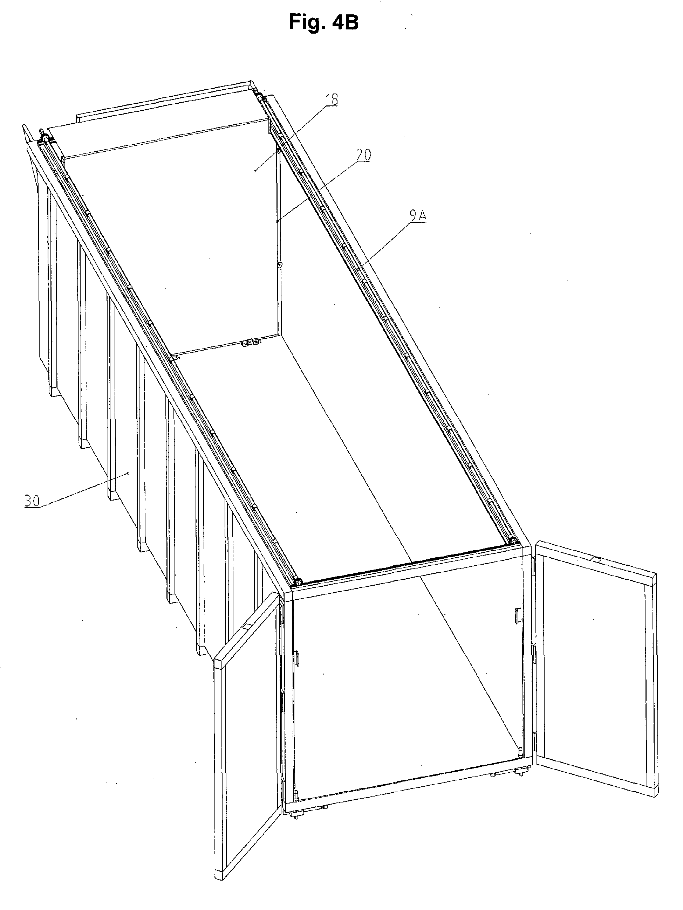

La position à plat du volet est plus particulièrement visible à la figure 1. La position dressée du volet est représentée aux figures 4A et 4B.

Pour son passage de la position inactive à la position active et inversement, le volet 18 est relié au fond de la benne par une liaison pivot de type charnière dont la conception permet la réalisation d'une liaison la plus étanche possible entre bord inférieur du volet et fond de la benne à l'état dressé du volet.

En position dressée, ce volet compartimente donc transversalement la benne et sépare le volume initial de remplissage de la benne en deux volumes, l'un s'étendant entre face avant et volet, ce volume contenant la poche en configuration inactive de cette dernière, l'autre s'étendant entre volet et face arrière de la benne, ce volume correspondant au volume de chargement de la benne lorsque la poche n'est pas utilisée.

Dans un mode de réalisation non représenté, le volet 18 peut être monté mobile à pivotement le long d'un axe vertical s'étendant le long d'une paroi longitudinale de la benne pour le passage du volet d'une position inactive dans laquelle il s'étend le long d'une paroi longitudinale de la benne sensiblement parallèlement à cette dernière à une position active dans laquelle il compartimente transversalement le volume intérieur de la benne.

La benne étant pré-équipée de sa garniture, le procédé de chargement/déchargement d'une telle benne comprend donc au moins deux séries d'étapes de chargement/déchargement sélectivement activables.

Pour équiper la benne de la garniture, il convient d'insérer la poche à l'intérieur de la benne avec les faces d'extrémité de la poche en regard des faces avant et arrière de la benne et les flancs de la poche en regard des faces longitudinales de la benne de sorte que la face d'extrémité de la poche munie de l'ouverture de déchargement soit la plus proche de la face arrière de la benne. Il convient également de fixer au moins une partie des moyens d'entraînement en déplacement des moyens de guidage des flancs de la poche à savoir les pièces rectilignes crantées des crémaillères en appui sur les faces avant et arrière de la benne.

On dispose ensuite les pignons aptes à venir en prise par engrènement avec lesdites pièces rectilignes crantées sur lesdites pièces, les pignons pré-équipant les rails auxquels les flancs de la poche sont couplés à coulissement. Il convient également si nécessaire d'équiper la benne de la partie stationnaire des moyens de tension des flancs de la poche, cette partie stationnaire étant formée par les organes mâles du genre plot ou femelle du genre fourreau décrits ci-dessus. Il convient également d'équiper la benne des moyens 14 activables/désactivables de maintien en position rapprochée des moyens 8 et 9 de guidage d'un flanc de la poche. Il peut être également nécessaire d'équiper la benne du volet 18 et des moyens 19, 20 de maintien du volet 18 de la garniture en position dressée. On suppose que cette garniture qui pré-équipe la benne présente une poche en configuration inactive.

Ladite poche étant, en configuration inactive, dans laquelle les faces d'extrémité arrière de la poche est rapprochée de la face avant de la benne et ménage un espace vide de chargement avec la face arrière de la benne, l'une des séries d'étapes de chargement/déchargement, dite série d'étapes de chargement/déchargement de la poche, comprend au moins une phase d'écartement de la face d'extrémité arrière de la poche de la face avant de la benne jusqu'à amener ladite poche dans la configuration active de plus grand encombrement de la poche, une phase de remplissage de la poche par son ouverture de chargement, une phase de vidange de la poche par son ouverture de déchargement et, par la face arrière de la benne, une phase de repli de la poche par rapprochement de la face d'extrémité arrière de la poche de la face avant de la poche jusqu'à amenée de la poche dans la configuration inactive de plus faible encombrement.

Au cours de l'autre série d'étapes de chargement/déchargement, dite série d'étapes de chargement/déchargement de la benne, ledit procédé comprend au moins une phase de remplissage de l'espace laissé libre entre poche et face arrière de la benne et une phase de déchargement de la benne par la face arrière de la benne.

A chaque fois, la phase de déchargement nécessite l'ouverture des portes formant la face arrière de la benne et le basculement de ladite benne.

Dans le cas où la garniture comporte en outre un volet 18, ledit procédé comprend en outre, si nécessaire avant la série d'étapes de chargement/déchargement de la poche, une phase d'amenée du volet en position inactive par exemple par rabat du volet contre le fond de la benne préalablement à la phase d'écartement de la face d'extrémité arrière de la face avant de la benne de la poche pour amener la poche dans la configuration active et après la série d'étapes de chargement/déchargement de la poche, une étape d'amenée du volet en position active par exemple par redressement du volet à l'issue de la phase de repli de la poche par rapprochement de la face d'extrémité arrière de ladite poche de la face avant de la benne. De même, ledit procédé peut comprendre, dans la série d'étapes de chargement/déchargement de la poche, une phase de tension des flancs de la poche à l'issue de la phase d'écartement de la face d'extrémité arrière de la poche de la face avant de la benne amenant la poche en configuration active de plus grand encombrement de la poche, et préalablement à la phase de remplissage de ladite poche.

Ledit procédé peut encore comprendre, dans la série d'étapes de chargement/déchargement de la poche, une phase de fermeture de l'ouverture de chargement après la phase de remplissage de la poche puis une phase d'ouverture de l'ouverture de chargement avant la phase de vidange de la poche, ces phases de fermeture et d'ouverture s'opérant respectivement par rapprochement des moyens de guidage des flancs de la poche et écartement desdits moyens de guidage.

Toutes ces phases peuvent s'opérer en un temps court et en présence d'un seul opérateur.

## Revendications

1. Garniture, pour benne (30) déchargeable par l'arrière par basculement, ladite garniture comprenant au moins une poche (1), à ouverture (6) de chargement par le dessus, insérable dans la benne, ladite poche (1) comportant un fond (1A) et une paroi (1B) latérale périphérique liée au fond (1A), ladite paroi (1B) latérale périphérique comportant au moins deux parties en regard formant les flancs (2, 3) de ladite poche et au moins une partie reliant lesdites parties en regard entre elles et formant l'une (5) des faces (4, 5) d'extrémité de la poche, dite face (5) d'extrémité arrière de la poche, les flancs (2, 3) et la face (5) d'extrémité arrière de la poche étant respectivement positionnables les uns (2, 3), en regard des faces (33) longitudinales de la benne, l'autre (5), en regard de la face arrière (32) de la benne,
**caractérisée en ce que** la poche (1) est une poche pliable, **en ce que** la face (5) d'extrémité dite arrière de la poche, positionnable en regard de la face (32) arrière de déchargement de la benne, est munie d'une ouverture (7) de déchargement du contenu de la poche (1) et **en ce que** la garniture comporte en outre, pour chaque flanc (2 ; 3) de la poche, des moyens (8 ; 9) de guidage en déplacement dudit flanc et des moyens (10 ; 11) de couplage à coulissement du flanc auxdits moyens (8 ; 9) de guidage pour le passage de la poche (1) entre une configuration active de plus grand encombrement de la poche, dans laquelle les flancs (2, 3) sont déployés et une configuration inactive de plus faible encombrement, dans laquelle les flancs (2, 3) sont repliés.

2. Garniture selon la revendication 1,
**caractérisée en ce qu'**elle comporte, pour chaque flanc (2 ; 3) de la poche, des moyens (12 ; 13) pour un montage mobile en déplacement des moyens (8 ; 9) de guidage du flanc de la poche dans le sens d'un rapprochement et d'un écartement des moyens (9 ; 8) de guidage de l'autre flanc de la poche, en vue du passage de l'ouverture (6) de chargement de la poche d'une position ouverte à une position fermée et inversement.

3. Garniture selon la revendication 2,
**caractérisée en ce que** les moyens (12 ; 13), pour le passage des moyens (8 ; 9) de guidage d'un flanc (2 ; 3) de la poche d'une position écartée à une position rapprochée des moyens (9 ; 8) de guidage de l'autre flanc (3 ; 2) de la poche, comprennent au moins des moyens d'entrainement en déplacement desdits moyens de guidage.

4. Garniture selon l'une des revendications 1 à 3,
**caractérisé en ce que** les moyens (8 ; 9) de guidage d'un flanc (2 ; 3) de la poche comprennent, au moins un élément du genre rail (8A ; 9A) auquel la partie supérieure dudit flanc est couplée par l'intermédiaire d'organes (10A ; 11A) de roulement ou de glissement pour un déplacement à coulissement du flanc (2 ; 3) le long dudit rail (8A ; 9A).

5. Garniture selon la revendication 4,
**caractérisée en ce qu'**elle comporte des moyens (12, 13) par l'intermédiaire desquels lesdits rails (8A, 9A) sont aptes à être montés mobiles dans le sens d'un rapprochement et d'un écartement l'un de l'autre pour le passage de l'ouverture (6) de chargement de la poche d'une position ouverte à une position fermée et inversement.

6. Garniture selon la revendication 5,
**caractérisée en ce que** les moyens, par l'intermédiaire desquels lesdits rails (8A, 9A) sont aptes à être montés mobiles dans le sens d'un rapprochement et d'un écartement l'un de l'autre pour le passage de l'ouverture (6) de chargement de la poche d'une position ouverte à une position fermée et inversement, comprennent, pour chaque rail (8A ; 9A), au moins des moyens (12 ; 13) d'entrainement en déplacement dudit rail, ces moyens d'entraînement en déplacement dudit rail comportant au moins une crémaillère dont le au moins un pignon (12A ; 13A) est porté par ledit rail (8A ; 9A) à déplacer, et dont la pièce (12B ; 13B) rectiligne crantée apte à s'engrener avec le au moins un pignon (12A ; 13A) est positionnable perpendiculairement audit rail (8A ; 9A).

7. Garniture selon l'une des revendications 2 ou 3,
**caractérisée en ce qu'**elle comporte des moyens (14) activables/désactivables de maintien en position rapprochée des moyens (8) de guidage d'un flanc (2) de la poche et des moyens (9) de guidage de l'autre flanc (3) de la poche.

8. Garniture selon l'une des revendications 1 à 7,
**caractérisée en ce que** la garniture comporte des moyens (15) activables/ désactivables de tension des flancs (2, 3) de la poche en vue d'un maintien à l'état tendu desdits flancs (2, 3), en configuration active de plus grand encombrement de la poche.

9. Garniture selon l'une des revendications 1 à 8,
**caractérisée en ce que** l'ouverture (7) de déchargement du contenu de la poche est une ouverture obturable.

10. Garniture selon l'une des revendications 1 à 9,
**caractérisée en ce que** le bord inférieur de l'ouverture (7) de déchargement qui s'étend entre les deux flancs (2, 3) de la poche est muni d'un rabat (16) positionnable en applique contre la surface externe de la face (5) d'extrémité arrière de la poche pour permettre l'obturation de ladite ouverture (7) de déchargement.

11. Garniture selon l'une des revendications 1 à 10,
**caractérisée en ce que** la face (5) d'extrémité arrière de la poche est interrompue au voisinage de sa zone de raccordement au fond (1A) de la poche, sur au moins une partie de sa largeur correspondant à la distance entre flancs (2, 3) de la poche, pour former l'ouverture (7) de déchargement du contenu de la poche.

12. Garniture selon l'une des revendications 1 à 11,
**caractérisée en ce que** la face (4) d'extrémité avant de la poche (1), opposée à la face (5) d'extrémité arrière de la poche, est réalisée sous forme d'une face ouverte obturable apte à être fermée par la face avant (31) de la benne à l'état inséré de la poche dans la benne.

13. Garniture selon l'une des revendications 1 à 12,
**caractérisée en ce qu'**elle comporte en outre au moins un volet (18) d'isolement de la poche (1) apte à être monté mobile entre deux positions, l'une active, dans laquelle ledit volet (18) est dressé et double par l'extérieur la face (5) d'extrémité arrière de la poche, l'autre, inactive, dans laquelle il libère l'accès à la face (5) d'extrémité arrière de la poche.

14. Garniture selon la revendication 13,
**caractérisée en ce qu'**elle comporte en outre des moyens (19, 20) activables/désactivables de maintien du volet (18) en position dressée pour permettre le passage dudit volet (18) d'une position dressée dans laquelle il double par l'extérieur ladite face (5) d'extrémité arrière, à l'état activé desdits moyens (19, 20) de maintien, à une position à plat dans laquelle il est apte à s'étendre sous le fond (1A) de la poche, de préférence au voisinage de la face (4) d'extrémité dite avant de la poche, opposée à la face (5) d'extrémité arrière de la poche, à l'état désactivé desdits moyens (19, 20) de maintien.

15. Benne (30) déchargeable par l'arrière par basculement, ladite benne (30) comprenant un fond, une face (32) arrière, des faces (33) longitudinales et une face (31) avant, et étant munie d'une garniture insérable au moins partiellement dans la benne (30), ladite garniture comprenant au moins une poche (1), à ouverture (6) de chargement par le dessus, ladite poche (1) comportant un fond (1A) et une paroi (1B) latérale périphérique liée au fond (1A), ladite paroi (1B) latérale périphérique comportant au moins deux parties en regard formant les flancs (2, 3) de ladite poche et au moins une partie reliant lesdites parties en regard entre elles et formant l'une (5) des faces (4, 5) d'extrémité de la poche, dite face (5) d'extrémité arrière de la poche, les flancs (2, 3) et la face (5) d'extrémité arrière de la poche étant respectivement positionnables les uns (2, 3), en regard des faces (33) longitudinales de la benne, l'autre (5), en regard de la face arrière (32) de la benne,
**caractérisée en ce que** la face (5) d'extrémité dite arrière de la poche, positionnable en regard de la face (32) arrière de déchargement de la benne, est munie d'une ouverture (7) de déchargement du contenu de la poche (1) et **en ce que** la poche (1) est une poche pliable qui, à l'état inséré dans la benne, présente sa face d'extrémité arrière montée mobile, dans le sens d'un rapprochement et d'un écartement de la face avant de la benne, suivant une direction sensiblement parallèle à l'axe longitudinal de la benne, entre une configuration active de la poche encore appelée état déployé de la poche, correspondant à l'état écarté desdites faces et au déploiement des flancs et une configuration inactive de la poche encore appelée état plié de la poche correspondant à l'état rapproché desdites faces et au repli des flancs.

16. Benne selon la revendication 15,
**caractérisée en ce que** les flancs de la poche sont, en configuration active de la poche, montés au moins partiellement mobiles dans le sens d'un rapprochement et d'un écartement l'un de l'autre suivant une direction transversale, de préférence orthogonale, à l'axe longitudinal de la benne entre une position fermée de l'ouverture de chargement de la poche correspondant à l'état rapproché desdits flancs, en particulier des bords libres supérieurs desdits flancs, et une position ouverte de l'ouverture de chargement de la poche correspondant à l'état écarté desdits flancs, en particulier des bords libres supérieurs desdits flancs.

17. Benne selon l'une des revendications 15 ou 16,
**caractérisée en ce que** la garniture comporte encore au moins un volet d'isolement de la poche qui, à l'état dressé en position active, compartimente transversalement la benne en un premier espace, disposé entre la face avant de la benne et le volet et logeant la poche à l'état plié en configuration inactive, et un deuxième espace, disposé entre le volet et la face arrière de la benne et à l'intérieur duquel une charge peut être transportée.
à l'intérieur duquel une charge peut être transportée.

18. Benne (30) déchargeable par l'arrière selon l'une des revendications 15 à 17,
**caractérisée en ce que** la garniture de la benne est conforme à l'une des revendications 2 à 12.

19. Procédé de chargement/déchargement d'une benne conforme à l'une des revendications 16 à 18, dont la poche pliable de la garniture, apte à passer d'une configuration active de plus grand encombrement de la poche dans laquelle les flancs sont déployés à une configuration inactive de plus faible encombrement, dans laquelle les flancs sont repliés, est en configuration inactive avec la face d'extrémité arrière de la poche rapprochée de la face avant de la benne et ménageant un espace libre de chargement avec la face arrière de la benne,
**caractérisé en ce que** ledit procédé comprend au moins deux séries d'étapes de chargement/déchargement sélectivement activables, et **en ce que**, au cours de l'une des séries d'étapes dite série d'étapes de chargement/déchargement de la poche, ledit procédé comprend au moins une phase d'écartement de la face d'extrémité arrière de la poche de la face avant de la benne jusqu'à amenée de ladite poche dans la configuration active de plus grand encombrement de la poche, une phase de remplissage de la poche par son ouverture (6) de chargement, une phase de vidage de la poche par son ouverture (7) de déchargement, une phase de repli de la poche par rapprochement de la face d'extrémité arrière de la poche de la face avant de la benne jusqu'à amenée de la poche dans la configuration inactive de plus faible encombrement, et **en ce qu'**au cours de l'autre série d'étapes de chargement/déchargement, dite série d'étapes de chargement/déchargement de la benne, ledit procédé comprend une phase de remplissage de l'espace laissé libre entre poche et face arrière de la benne et une phase de déchargement de la benne par la face arrière de ladite benne.

## Patentansprüche

1. Auskleidung für einen nach hinten durch Kippen entladbaren Aufbau (30), wobei die Auskleidung mindestens eine Tasche (1) mit Beladeöffnung (6) von oben umfasst, die in den Aufbau einsetzbar ist, wobei die Tasche (1) einen Boden (1A) und eine mit dem Boden (1A) verbundene seitliche Umfangswand (1 B) aufweist, wobei die seitliche Umfangswand (1 B) mindestens zwei gegenüberliegende Teile aufweist, die die Flanken (2, 3) der Tasche bilden und mindestens einen Teil, der die einander gegenüberliegenden Teile verbindet und eine (5) der Endseiten (4, 5) der Tasche bildet, nämlich die hintere Endseite (5) der Tasche, wobei die Flanken (2, 3) und die hintere Endseite (5) der Tasche jeweils, was die einen (2, 3) betrifft, gegenüber den Längsseiten (33) des Aufbaus, was die andere (5) betrifft, gegenüber der hinteren Seite (32) des Aufbaus positionierbar sind"
**dadurch gekennzeichnet, dass** die Tasche (1) eine faltbare Tasche ist, dass die hintere Endseite (5) der Tasche, die gegenüber der hinteren Entladeseite (32) des Aufbaus positionierbar ist, mit einer Entladeöffnung (7) des Inhalts der Tasche (1) ausgestattet ist und dass die Auskleidung ferner für jede Flanke (2; 3) der Tasche Verlagerungsführungsmittel (8; 9) der Flanke und Gleitkopplungsmittel (10; 11) der Flanke an den Führungsmitteln (8; 9) für den Übergang der Tasche (1) von einer aktiven Konfiguration größeren Platzbedarfs der Tasche, in der die Flanken (2, 3) entfaltet sind, und einer inaktiven Konfiguration geringeren Platzbedarfs, in der die Flanken (2, 3) gefaltet sind, aufweist.

2. Auskleidung nach Anspruch 1,
**dadurch gekennzeichnet, dass** sie für jede Flanke (2; 3) der Tasche Mittel (12; 13) für eine bewegliche Verlagerungsmontage der Führungsmittel (8; 9) der Flanke der Tasche in Richtung einer Annäherung und einer Entfernung der Führungsmittel (9; 8) der anderen Flanke der Tasche im Hinblick auf den Übergang der Beladeöffnung (6) der Tasche von einer geöffneten Position in eine geschlossene Position und umgekehrt aufweist.

3. Auskleidung nach Anspruch 2,
**dadurch gekennzeichnet, dass** die Mittel (12; 13) für den Übergang der Führungsmittel (8; 9) einer Flanke (2; 3) der Tasche von einer entfernten Position in eine angenäherte Position der Führungsmittel (9; 8) der anderen Flanke (3; 2) der Tasche mindestens Verlagerungsantriebsmittel der Führungsmittel umfassen.

4. Auskleidung nach einem der Ansprüche 1 bis 3,
**dadurch gekennzeichnet, dass** die Führungsmittel (8; 9) einer Flanke (2; 3) der Tasche mindestens ein Element der Art Schiene (8A; 9A) umfassen, an die der obere Teil der Flanke mit Hilfe von Roll- oder Gleitorganen (10A; 11A) für eine gleitende Verlagerung der Flanke (2; 3) entlang der Schiene (8A; 9A) umfassen.

5. Auskleidung nach Anspruch 4,
**dadurch gekennzeichnet, dass** sie Mittel (12, 13) aufweist, mit deren Hilfe die Schienen (8A, 9A) in Richtung einer Annäherung und einer Entfernung zueinander für den Übergang der Beladeöffnung (6) der Tasche von einer geöffneten Position in eine geschlossene Position und umgekehrt beweglich montierbar sind.

6. Auskleidung nach Anspruch 5,
**dadurch gekennzeichnet, dass** die Mittel, mit deren Hilfe die Schienen (8A, 9A) in Richtung einer Annäherung und einer Entfernung voneinander für den Übergang der Beladeöffnung (6) der Tasche von einer geöffneten Position in eine geschlossene Position und umgekehrt beweglich montierbar sind, für jede Schiene (8A; 9A) mindestens Verlagerungsantriebsmittel (12; 13) der Schiene umfassen, wobei diese Verlagerungsantriebsmittel der Schiene mindestens eine Zahnstange aufweisen, deren mindestens ein Zahnrad (12A; 13A) von der zu verlagernden Schiene (8A; 9A) getragen wird, und deren gerades Rastteil (12B; 13B), das imstande ist, mit dem mindestens einen Zahnrad (12A; 13A) zu rasten, lotrecht zur Schiene (8A; 9A) positionierbar ist.

7. Auskleidung nach einem der Ansprüche 2 oder 3,
**dadurch gekennzeichnet, dass** sie Haltemittel (14) aufweist, die in angenäherter Position der Führungsmittel (8) einer Flanke (2) der Tasche und der Führungsmittel (9) der anderen Flanke (3) der Tasche aktivierbar/deaktivierbar sind.

8. Auskleidung nach einem der Ansprüche 1 bis 7,
**dadurch gekennzeichnet, dass** die Auskleidung aktivierbare/deaktivierbare Spannungsmittel (15) der Flanken (2, 3) der Tasche im Hinblick auf einen gespannten Zustand der Flanken (2, 3) in aktiver Konfiguration größeren Platzbedarfs der Tasche aufweist.

9. Auskleidung nach einem der Ansprüche 1 bis 8,
**dadurch gekennzeichnet, dass** die Entladeöffnung (7) des Inhalts der Tasche eine verschließbare Öffnung ist.

10. Auskleidung nach einem der Ansprüche 1 bis 9,
**dadurch gekennzeichnet, dass** der untere Rand der Entladeöffnung (7), der sich zwischen den zwei Flanken (2, 3) der Tasche erstreckt, mit einer Klappe (16) ausgestattet ist, die anliegend an der Außenfläche der hinteren Endseite (5) der Tasche positionierbar ist, um den Verschluss der Entladeöffnung (7) zu erlauben.

11. Auskleidung nach einem der Ansprüche 1 bis 10,
**dadurch gekennzeichnet, dass** die hintere Endseite (5) der Tasche in der Nähe ihrer Anschlusszone an den Boden (1A) der Tasche über mindestens einen Teil ihrer Breite unterbrochen ist, der dem Abstand zwischen den Flanken (2, 3) der Tasche entspricht, um die Entladeöffnung (7) des Inhalts der Tasche zu bilden.

12. Auskleidung nach einem der Ansprüche 1 bis 11,
**dadurch gekennzeichnet, dass** die vordere Endseite (4) der Tasche (1), die der hinteren Endseite (5) der Tasche gegenüberliegt, in Form einer verschließbaren offenen Seite realisiert ist, die imstande ist, von der Vorderseite (31) des Aufbaus verschlossen zu sein, wenn die Tasche in den Aufbau eingesetzt ist.

13. Auskleidung nach einem der Ansprüche 1 bis 12,
**dadurch gekennzeichnet, dass** sie ferner mindestens einen Isolierflügel (18) der Tasche (1) aufweist, der imstande ist, zwischen zwei Positionen, einer aktiven, in der der Flügel (18) aufgerichtet ist und von außen die hintere Endseite (5) der Tasche doubliert, und einer andern inaktiven, in der er den Zugang zur hinteren Endseite (5) der Tasche freigibt, beweglich montiert zu sein.

14. Auskleidung nach Anspruch 13,
**dadurch gekennzeichnet, dass** sie ferner aktivierbare/deaktivierbare Haltemittel (19, 20) des Flügels (18) in aufgerichteter Position aufweist, um den Übergang des Flügels (18) aus einer aufgerichteten Position, in der er im aktivierten Zustand der Haltemittel (19, 20) von außen die hinteren Endseite (5) doubliert, in eine flache Position, in der er imstande ist, sich im deaktivierten Zustand der Haltemittel (19, 20) unter dem Boden (1A) der Tasche zu erstrecken, vorzugsweise in der Nähe der vorderen Endseite (4) der Tasche, die der hinteren Endseite (5) der Tasche gegenüberliegt, zu erlauben.

15. Nach hinten durch Kippen entladbarer Aufbau (30), wobei der Aufbau (30) einen Boden, eine hintere Seite (32), Längsseiten (33) und eine Vorderseite (31) umfasst und mit einer Auskleidung ausgestattet ist, die mindestens teilweise in den Aufbau (30) einsetzbar ist, wobei die Auskleidung mindestens eine Tasche (1) mit Beladeöffnung (6) von oben umfasst, wobei die Tasche (1) einen Boden (1A) und eine mit dem Boden (1A) verbundene seitliche Umfangswand (1 B) aufweist, wobei die seitliche Umfangswand (1 B) mindestens zwei gegenüberliegende Teile aufweist, die die Flanken (2, 3) der Tasche bilden und mindestens einen Teil, der die einander gegenüberliegenden Teile verbindet und eine (5) der Endseiten (4, 5) der Tasche bildet, nämlich die hintere Endseite (5) der Tasche, wobei die Flanken (2, 3) und die hintere Endseite (5) der Tasche jeweils, was die einen (2, 3) betrifft, gegenüber den Längsseiten (33) des Aufbaus, was die andere (5) betrifft, gegenüber der hinteren Seite (32) des Aufbaus positionierbar sind,
**dadurch gekennzeichnet, dass** die hintere Endseite (5) der Tasche, die gegenüber der hinteren Entladeseite (32) des Aufbaus positionierbar ist, mit einer Entladeöffnung (7) des Inhalts der Tasche (1) ausgestattet ist
und dass die Tasche (1) eine faltbare Tasche ist, die im in den Aufbau eingesetzten Zustand ihre beweglich montierte hintere Endseite in Richtung einer Annäherung und einer Entfernung von der Vorderseite des Aufbaus gemäß einer Richtung etwa parallel zur Längsachse des Aufbaus zwischen einer aktiven Konfiguration der Tasche, die auch als entfalteter Zustand der Tasche bezeichnet wird, der dem entfernten Zustand der Seiten und der Entfaltung der Flanken entspricht, und einer inaktiven Konfiguration der Tasche, die auch als gefalteter Zustand der Tasche bezeichnet wird, der dem angenäherten Zustand der Seiten der Faltung der Flanken entspricht, präsentiert.

16. Aufbau nach Anspruch 15,
**dadurch gekennzeichnet, dass** die Flanken der Tasche in aktiver Konfiguration der Tasche mindestens teilweise in Richtung einer Annäherung und einer Entfernung voneinander gemäß einer Querrichtung vorzugsweise orthogonal zur Längsachse des Aufbaus zwischen einer geschlossenen Position der Beladeöffnung der Tasche, die dem angenäherten Zustand der Flanken, insbesondere der oberen freien Ränder der Flanken, entspricht, und einer geöffneten Position der Beladeöffnung der Tasche, die dem entfernten Zustand der Flanken, insbesondere der oberen freien Ränder der Flanken, entspricht, beweglich montiert sind.

17. Aufbau nach einem der Ansprüche 15 oder 16,
**dadurch gekennzeichnet, dass** die Auskleidung noch mindestens einen Isolierflügel der Tasche aufweist, der im aufgerichteten Zustand in aktiver Position den Aufbau quer in einen ersten Raum, der zwischen der vorderen Seite des Aufbaus und dem Flügel angeordnet ist und die Tasche im gefalteten Zustand in inaktiver Konfiguration aufnimmt, und in einem zweiten Raum, der zwischen dem Flügel und der hinteren Seite des Aufbaus angeordnet ist und in dem eine Last transportiert werden kann, unterteilt.

18. Nach hinten entladbarer Aufbau (30) nach einem der Ansprüche 15 bis 17,
**dadurch gekennzeichnet, dass** die Auskleidung des Aufbaus einem der Ansprüche 2 bis 12 entspricht.

19. Belade-/Entladeverfahren eines Aufbaus nach einem der Ansprüche 16 bis 18, wobei die faltbare Tasche der Auskleidung, die imstande ist, von einer aktiven Konfiguration größeren Platzbedarfs der Tasche, bei die die Flanken entfaltet sind, in eine inaktive Konfiguration geringeren Platzbedarfs, in der die Flanken gefaltet sind, zu wechseln, in inaktiver Konfiguration ist mit der hinteren Endseite der Tasche angenähert an die vordere Seite des Aufbaus, wobei ein freier Laderaum mit der hinteren Seite des Aufbaus ausgebildet wird,
**dadurch gekennzeichnet, dass** das Verfahren mindestens zwei selektiv aktivierbare Belade-/Entladeschrittserien umfasst und dass das Verfahren während einer der Schrittserien, als Belade-/Entladeschrittserie der Tasche bezeichnet, mindestens eine Entfernungsphase der hinteren Endseite der Tasche von der vorderen Seite des Aufbaus, bis die Tasche in die aktive Konfiguration größeren Platzbedarfs der Tasche geführt ist, eine Füllphase der Tasche durch ihre Beladeöffnung (6), eine Entleerungsphase der Tasche durch ihre Entladeöffnung (7), eine Faltphase der Tasche durch Annäherung der hinteren Endseite der Tasche an die vordere Seite des Aufbaus, bis die Tasche in die inaktive Konfiguration kleineren Platzbedarfs geführt ist, umfasst, und dass während der anderen Belade-/Entladeschrittserie, als Belade-/Entladeschrittserien des Aufbaus bezeichnet, das Verfahren eine Füllphase des zwischen der Tasche und der hinteren Seite des Aufbaus freigelassenen Raums und eine Entladephase des Aufbaus über die hinteren Seite des Aufbaus umfasst.

## Claims

1. A lining, for a rear-unloading dump truck body (30) by tilting, said lining comprising at least one pocket (1), with a top-unloading opening (6), that can be inserted in the dump truck body, said pocket (1) including a bottom (1A) and a peripheral side wall (1B) connected to the bottom (1A), said peripheral side wall (1B) including at least two opposite parts forming the flanks (2, 3) of said pocket and at least one part connecting said opposite parts to each other and forming one (5) of the end faces (4, 5) of the pocket, called rear end face (5) of the pocket, the flanks (2, 3) and the rear end face (5) of the pocket respectively being positionable for some (2, 3) across from the longitudinal faces (33) of the dump truck body, and for the other (5) across from the rear face (32) of the dump truck body,
**characterized in that** the pocket (1) is a foldable pocket, **in that** the so-called rear end face (5) of the pocket, which can be positioned across from the rear unloading face (32) of the dump truck body, is provided with an opening (7) for unloading the contents of the pocket (1), and **in that** the lining further includes, for each flank (2; 3) of the pocket, means (8; 9) for guiding the movement of said flank and means (10; 11) for slidingly coupling the flank to said guide means (8; 9) for the passage of the pocket (1) between an active configuration with a larger bulk of the pocket, in which the flanks (2, 3) are deployed, and an inactive configuration with a smaller bulk, in which the flanks (2, 3) are folded.

2. The lining according to claim 1,
**characterized in that** it includes, for each flank (2; 3) of the pocket, means (12; 13) for movably mounting means (8; 9) for guiding the flank of the pocket in a direction bringing the guide means (9; 8) of the other flank of the pocket closer and further away, so that the loading opening (6) of the pocket can go from an open position to a closed position and vice versa.

3. The lining according to claim 2,
**characterized in that** the means (12; 13) for allowing the means (8; 9) for guiding a flank (2; 3) of the pocket from a position separated from the means (9; 8) for guiding the other flank (3; 2) of the pocket to a position closer thereto, comprise at least means for driving the movement of said guide means.

4. The lining according to one of claims 1 to 3,
**characterized in that** the means (8; 9) for guiding one flank (2; 3) of the pocket comprise at least one rail-type element (8A; 9A) to which the upper part of said flank is coupled by rolling or sliding members (10A; 11A) for sliding movement of the flank (2; 3) along said rail (8A; 9A).

5. The lining according to claim 4,
**characterized in that** it includes means (12, 13) using which said rails (8A, 9A) can be movably mounted in the direction coming closer to and further away from each other so that the loading opening (6) of the pocket can go from an open position to a closed position and vice versa.

6. The lining according to claim 5,
**characterized in that** the means, using which said rails (8A, 9A) can be mounted removably in the direction coming closer to and further away from each other to allow the loading opening (6) of the pocket go from an open position to a closed position and vice versa, comprise, for each rail (8A; 9A), at least means (12; 13) for driving the movement of said rail, said means for driving the movement of said rail including at least one rack whereof the at least one pinion (12A; 13A) is supported by said rail (8A; 9A) to be moved, and whereof the notched rectilinear part (12B; 13B) able to mesh with the at least one pinion (12A; 13A) is positionable perpendicular to said rail (8A; 9A).

7. The lining according to one of claims 2 or 3,
**characterized in that** it includes means (14) that can be activated/deactivated for keeping the means (8) for guiding one flank (2) of the pocket and means (9) for guiding the other flank (3) of the pocket in a close position.

8. The lining according to one of claims 1 to 7,
**characterized in that** the lining includes means (15) that can be activated/deactivated to stretch the flanks (2, 3) of the pocket so as to keep said flanks (2, 3) in the stretched state, in the active configuration with a larger bulk of the pocket.

9. The lining according to one of claims 1 to 8,
**characterized in that** the opening (7) for unloading the contents of the pocket is a sealable opening.

10. The lining according to one of claims 1 to 9,
**characterized in that** the lower edge of the unloading opening (7) that extends between the two flanks (2, 3) of the pocket is provided with an overlay (16) that can be positioned pressing against the outer surface of the rear end face (5) of the pocket to allow sealing of said unloading opening (7).

11. The lining according to one of claims 1 to 10,
**characterized in that** the rear end face (5) of the pocket is interrupted near its area connecting to the bottom (1A) of the pocket, over at least part of its width corresponding to the distance between the flanks (2, 3) of the pocket, to form the opening (7) for unloading the contents of the pocket.

12. The lining according to one of claims 1 to 11,
**characterized in that** the front end face (4) of the pocket (1), opposite the rear end face (5) of the pocket, is made in the form of a sealable open face that can be closed by the front face (31) of the dump truck body in the state of the pocket inserted into the dump truck body.

13. The lining according to one of claims 1 to 12,
**characterized in that** it further includes at least one flap (18) for isolating the pocket (1) that can be movably mounted between two positions, namely an active position, in which said flap (18) is upright and lines the outside of the rear end face (5) the pocket, and an inactive position, in which it frees access to the rear end face (5) of the pocket.

14. The lining according to claim 13, **characterized in that** it further includes means (19, 20) that can be activated/deactivated for keeping the flap (18) in the upright position to allow said flap (18) to go from an upright position, in which it lines the outside of said rear end face (5), in the activated state of said maintaining means (19, 20), to a flat state in which it can extend below the bottom (1A) of the pocket, preferably near the so-called front end face (4) of the pocket, opposite the rear end face (5) of the pocket, in the deactivated state of said maintaining means (19, 20).

15. A rear-unloading dump truck body (30), said dump truck body (30) comprising a bottom, a rear face (32), longitudinal faces (33) and a front face (31), and being provided with a lining that can be at least partially inserted in the dump truck body (30), said lining comprising at least one pocket (1), with a top-loading opening (6), said pocket (1) including a bottom (1A) and a peripheral side wall (1B) connected to the bottom (1A), said peripheral side wall (1B) including at least two opposite parts forming the flanks (2, 3) of said pocket and at least one part connecting said opposite parts to each other and forming one (5) of the end faces (4, 5) of the pocket, called rear end face (5) of the pocket, the flanks (2, 3) and the rear end face (5) of the pocket respectively being positionable for some (2, 3) across from the longitudinal faces (33) of the dump truck body, and for the other (5) across from the rear face (32) of the dump truck body,
**characterized in that** the so-called rear end face (5) of the pocket, positionable across from the rear unloading face (32) of the dump truck body, is provided with an opening (7) for unloading the contents of the pocket (1),
and **in that** the pocket (1) is a foldable pocket which, in the state inserted into the dump truck body, has its rear end face mounted removably, in the direction coming closer to and further away from the front face of the dump truck body, along a direction substantially parallel to the longitudinal axis of the dump truck body, between an active configuration of the pocket, also called deployed state of the pocket, corresponding to the separated state of said faces and the deployment of the flanks, and an inactive configuration of the pocket, also called folded state of the pocket, corresponding to the close together state of said faces and the folding of the flanks.

16. The dump truck body according to claim 15,
**characterized in that** the flanks of the pocket are, in the active configuration of the pocket, mounted at least partially movably in the direction coming closer to and further away from each other in a direction transverse, preferably orthogonal, to the longitudinal axis of the dump truck body between a closed position of the loading opening of the pocket corresponding to the close together state of said flanks, in particular the upper free edges of said flanks, and an open position of the loading opening of the pocket corresponding to the separated state of said flanks, in particular the upper free edges of said flanks.

17. The dump truck body according to one of claims 15 or 16,
**characterized in that** the lining also includes at least one flap for isolating the pocket which, in the upright state in the active position, transversely creates compartments in the dump truck body in the form of a first space, positioned between the front face of the dump truck body and the flap and housing the pocket in the folded state in the inactive configuration, and a second space, positioned between the flap and the rear face of the dump truck body and inside which a load can be carried.

18. The rear-unloading dump truck body (30) according to one of claims 15 to 17,
**characterized in that** the lining of the dump truck body is according to one of claims 2 to 12.

19. A method for loading/unloading a dump truck body according to one of claims 16 to 18, whereof the foldable pocket of the lining, which is capable of going from an active configuration with a larger bulk of the pocket in which the flanks are deployed to an inactive configuration with a smaller bulk, in which the flanks are folded, is in the inactive configuration with the rear end face of the pocket close to the front face of the dump truck body and forming a free space for loading with the rear face of the dump truck body,
**characterized in that** said method comprises at least two series of loading/unloading steps that can be activated selectively, and **in that**, during one of the series of steps called series of loading/unloading steps of the pocket, said method comprises at least one phase for moving the rear end face of the pocket away from the front face of the dump truck body until said pocket is brought into the active configuration with a larger bulk of the pocket, a phase for filling the pocket through its loading opening (6), a phase for unloading the pocket through its unloading opening (7), a phase for folding the pocket by bringing the rear end face of the pocket closer to the front face of the dump truck body until the pocket is brought into the inactive configuration with a smaller bowl, and **in that** during the other series of loading/unloading steps, called series of loading/unloading steps of the dump truck body, said method comprises a phase for filling the space left free between the pocket and the rear face of the dump truck body and a phase for unloading the dump truck body through the rear face of said dump truck body.
